# FASCICULE DE BREVET EUROPEEN

(11) **EP 1 963 706 B1**
(45) Date de publication et mention de la délivrance du brevet: **13.10.2010**
(21) Numéro de dépôt: 06847114.3
(22) Date de dépôt: 21.12.2006
(51) Int. Cl.: F16F 15/08, B64G 1/10

(54) **DISPOSITIF MODULAIRE D'ISOLATION MULTI-AXES DE VIBRATIONS ET DE CHOCS, A BASE D'ELASTOMERE**
MODULARE MEHRACHSIGE SCHWINGUNGS-/STOSSDÄMPFUNGSVORRICHTUNG AUF ELASTOMERBASIS
ELASTOMER-BASED MODULAR MULTI-AXIS VIBRATION/SHOCK ISOLATION DEVICE

(30) Priorité: 21.12.2005 FR 0513083
(43) Date de publication de la demande: 03.09.2008
(73) Titulaire: Astrium SAS, 75016 Paris (FR)
(72) Inventeur: CAMARASA, Patrick, 31320 Rebigue (FR)
(74) Mandataire: Cabinet Plasseraud
(86) Numéro de dépôt international: PCT/FR2006/002839
(87) Numéro de publication internationale: WO 2007/077350

(56) Documents cités:
- DE-A1- 10 054 323
- JP-A- 2000 145 889
- JP-A- 2001 140 984
- US-A- 5 971 375

## Description

La présente invention concerne un dispositif d'isolation multi-axes des vibrations engendrées par un équipement vibrant et transmises à une structure porteuse de cet équipement, comme, par exemple, dans le cas où l'équipement vibrant comprend au moins un élément tournant et/ou déplacé en translation périodique, le terme isolation devant être compris au sens d'au moins une atténuation par des éléments placés en série entre la source de vibrations, qui est l'équipement vibrant, et le support à isoler, qui est la structure porteuse.

Le dispositif d'isolation doit également, dans certains cas, remplir une autre fonction, a priori antagoniste à celle présentée ci-dessus, et qui est d'atténuer des charges dynamiques, telles que vibrations et chocs, importantes et transitoires appliquées à la structure porteuse, et se propageant à travers le dispositif d'isolation jusqu'à l'équipement, éventuellement sensible à ces charges.

Pour faciliter la compréhension de l'invention, celle-ci est décrite ci-après plus particulièrement dans le cadre de certaines applications liées au secteur spatial, et pour lesquelles l'invention présente un intérêt particulier pour le déposant.

Il est bien connu que certains actionneurs, couramment utilisés pour le contrôle d'attitude de satellites, possèdent un ou des éléments tournants, dont l'équilibrage toujours imparfait dans la pratique génère des vibrations se propageant à travers la structure du satellite. C'est le cas, par exemple, des roues de réaction, roues cinétiques, gyrodynes (appelés également actionneurs gyroscopiques ou CMG dans la littérature), roues à stockage d'énergie, etc.

D'autres équipements embarqués à bord des satellites peuvent engendrer également de telles vibrations, comme par exemple des générateurs de froid à base de compresseurs.

Les vibrations créées par ces équipements peuvent se transmettre jusqu'à des charges utiles des satellites et dégrader leurs performances, comme c'est le cas, par exemple, pour des instruments d'observation optique particulièrement sensibles aux bougés de la ligne de visée préjudiciables à la qualité des images obtenues.

Pour contrecarrer ces effets dommageables, selon l'état de la technique, l'équipement perturbateur ou un ensemble d'équipements perturbateurs est monté sur un dispositif d'isolation constituant une interface de montage de l'équipement ou ensemble d'équipements sur la structure porteuse. Outre cette fonction de montage, le dispositif d'isolation doit atténuer la transmission des vibrations générées par au moins un équipement selon un certain gabarit fréquentiel dépendant de l'utilisation. Dans le cas où au moins un équipement est un actionneur en couple ou en force, le dispositif d'isolation doit également transmettre les couples ou forces utiles générées par cet équipement selon un gabarit fréquentiel de transmissibilité spécifié également par l'utilisateur. D'autre part, il est souhaité, sinon nécessaire, également que le dispositif d'isolation atténue les charges dynamiques très fortes appliquées sur la structure porteuse lors de la phase de lancement du satellite, ce qui semble contradictoire avec la fonction d'isolation des vibrations d'au moins un équipement, ces vibrations étant de plusieurs ordres de grandeur inférieures aux charges dynamiques au lancement.

Le dispositif d'isolation selon l'invention doit donc fonctionner :
- au sol, en particulier pendant les essais de performances et les essais de qualification effectués avant le lancement du satellite,
- pendant le lancement du satellite, dans des environnements vibratoires, acoustiques et de chocs particulièrement difficiles, et
- lorsque le satellite est en orbite, où les performances d'isolation de très petites vibrations devront atteindre les niveaux attendus.

Enfin, le dispositif d'isolation selon l'invention doit également parfois maintenir au cours du temps une certaine stabilité d'alignement du ou des équipements vibrants par rapport à la structure porteuse.

Les valeurs numériques suivantes correspondent à une plage de fonctionnement typique d'une réalisation particulière du dispositif de l'invention lorsqu'il est appliqué à l'isolation d'actionneurs de type roues de réaction ou gyrodynes à bord de satellites :
- masse d'un équipement vibrant à isoler: typiquement de 1 kg à 30 kg ;
- forces et couples perturbateurs engendrés par l'équipement vibrant: 1N à 100N sur une plage fréquentielle de 10Hz à 1000Hz ;
- facteur d'atténuation recherché en vibrations et chocs : 3 à 50 dans la plage 10Hz à 1000 Hz (typiquement une atténuation en pente -2 en échelle logarithmique dans le domaine fréquentiel) ;
- facteur de surtension du dispositif d'isolation : inférieur à 2 ;
- facteur de transmissibilité recherché : 1 ± 5% dans la plage 0 à 10 Hz ;
- stabilité d'alignement dans le temps : pouvant aller jusqu'à typiquement 0.05° ;
- environnement au lancement : typiquement 20-100g dans la gamme 10-100 Hz (vibrations) et 1000g dans la gamme 100-1000Hz (chocs)(g étant l'accélération du champ de gravité terrestre).

A ce point du mémoire descriptif, il faut noter que le dispositif proposé par l'invention et qui est présenté ci-dessous peut servir également à isoler non pas un seul équipement, mais par exemple un ensemble d'équipements dont certains sont perturbateurs car vibrants, tous montés sur un même plateau porte-équipements. Le dispositif d'isolation selon l'invention peut également être utilisé à l'interface entre une partie d'un satellite, par exemple un module de service, et une autre partie du satellite, par exemple une charge utile. Dans ces deux cas, les valeurs numériques ci-dessus, données à titre indicatif, ne sont pas forcément applicables.

Par les brevets US5305981 et US5971375, on connaît des dispositifs d'isolation multi-axes comportant une pluralité de plots d'isolation disposés entre deux pièces structurales, dont l'une porte un équipement vibrant, et l'autre doit être fixée à la structure porteuse du satellite. Par exemple, US5305981 décrit un dispositif composé de 6 éléments d'isolation dans un arrangement symétrique en configuration hexapode symétrique de 3 paires de plots obliques fournissant un amortissement visqueux et une atténuation des vibrations et des chocs au lancement du satellite et en opération dans l'espace. Dans ce dispositif, les éléments d'isolation sont montés sur des joints à deux degrés de liberté permettant un jeu axial et une minimisation des moments de flexion. Des butées situées entre les deux pièces structurales du dispositif limitent les excursions des éléments d'isolation, en particulier lors du lancement du satellite. Il est à noter qu'avec ce concept, 6 éléments d'isolation sont nécessaires pour réaliser une isolation totale en forces et couples suivant les trois axes. Le montage du dispositif sur la structure du satellite nécessite une pièce structurale intermédiaire. Les butées ne sont pas intégrées aux éléments d'isolation. Le concept n'est pas modulaire. Une généralisation du concept à d'autres types d'isolation n'est pas évidente, en particulier lorsque le nombre de degrés de liberté à isoler varie. Le réglage du dispositif en fonction des spécifications d'isolation des petites vibrations générées par l'équipement, et d'isolation des grands niveaux de vibrations et chocs lors du lancement, ainsi que de transmissibilité des couples utiles générés par l'équipement n'est pas aisé. L'encombrement du dispositif, sa masse, son absence de modularité ne favorisent pas sa conception, ni sa réalisation, ni son utilisation.

Le dispositif décrit dans US5971375 a une configuration similaire. Les mêmes limitations apparaissent, avec en plus une disposition complexe d'une pluralité de ressorts.

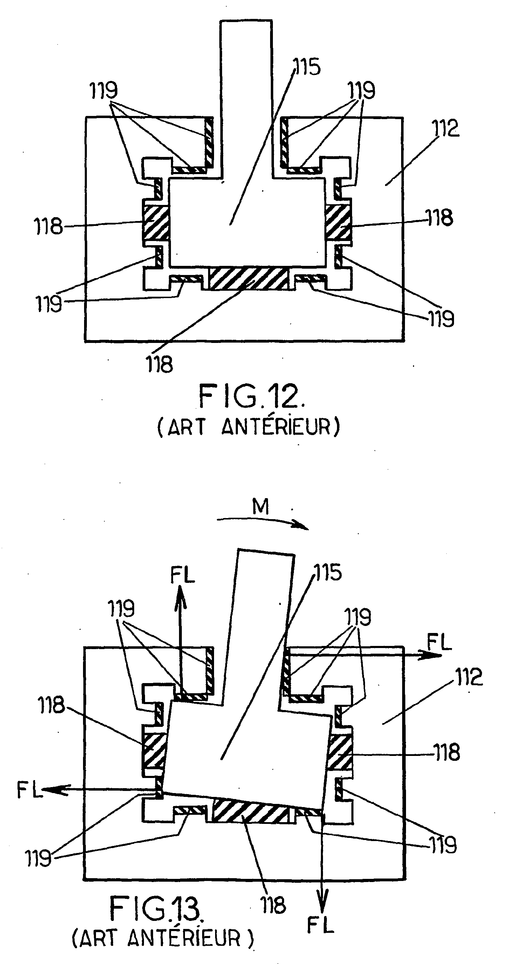

Du document de brevet JP 2000 145889, il est connu également des inserts de fixation d'un équipement sur une structure porteuse, comportant (voir figures 12 et 13) deux pièces rigides, l'une externe 112, l'autre interne 115 solidaire de l'équipement, et, reliées l'une à l'autre par l'intermédiaire d'une pluralité de plots 118 d'isolation en élastomère, et telles que la pièce interne 115 vienne en butée contre la pièce externe 112 dès que la charge appliquée à l'un des plots 118 dépasse une limite autorisée. Dans le cas, considéré ici, d'un système d'isolation d'équipement(s) à bord de satellites devant résister au lancement, l'application du principe décrit dans JP 2000 145889 conduit nécessairement à l'implantation d'un grand nombre de butées 119 entre lesdites pièces internes 115 et pièces externes 112, afin de bloquer l'ensemble des degrés de liberté en translation et basculement de la pièce interne 115 par rapport à la pièce externe 112, du fait des charges extrêmement importantes subies par le dispositif suivant ces degrés de liberté durant le lancement. Une réalisation d'un tel dispositif est présentée sur la figure 12 correspondant au dispositif du document JP 2000 145889. Ce type d'insert, dont on souligne la nécessaire complexité de conception et réalisation, pourrait éventuellement être utilisé tel quel pour isoler les petites vibrations générées par un équipement. Cependant, sa conception est telle que, lorsque l'équipement et sa structure porteuse sont soumis l'un par rapport à l'autre à de forts déplacements et accélérations en vibrations ou en chocs, par exemple lors de la phase de lancement du satellite, non pas une seule, mais plusieurs butées 119 de l'insert vont se mettre en action simultanément, par exemple comme le montre la figure 13 lors de basculements, dus à des moments M. Tous les moments pouvant engendrer des contraintes excessives sur les plots 118 doivent être bloqués par des butées 119. Ceci créera d'énormes efforts locaux FL dans l'insert, et conduira inévitablement à sa destruction, car, comme mentionné précédemment, les vibrations à haute fréquence subies pendant le lancement ont un niveau très important. Pour éviter cela, il sera nécessaire de bloquer tous les mouvements relatifs des pièces interne 115 et externe 112 par une liaison rigide, grâce à un dispositif annexe de gerbage. Il faudra ensuite déverrouiller ce dispositif de gerbage une fois en orbite, à l'aide d'éléments pyrotechniques ou thermiques, ce qui complexifiera sensiblement l'ensemble du système d'isolation.

Le problème à la base de l'invention est de proposer un dispositif d'isolation multi-axes d'au moins un équipement générateur de vibrations, embarqué sur une structure porteuse telle qu'un satellite, et du type présenté ci-dessus, et qui remédie aux inconvénients précités de l'état de la technique, et convienne mieux aux diverses exigences de la pratique que les dispositifs connus, en particulier selon les documents de brevet US et JP précités.

Le but de la présente invention est donc d'apporter des solutions simples aux limitations connues de l'état de la technique, et, à cet effet, l'invention propose un dispositif d'isolation multi-axes d'au moins un équipement générateur de vibrations, embarqué sur une structure porteuse, et qui comprend au moins trois modules d'isolation répartis à la périphérie dudit équipement vibrant ou d'un support de ce dernier, et qui se **caractérise en ce que** chaque module d'isolation comporte deux pièces rigides dont l'une, dite pièce externe, est destinée à être fixée à la structure porteuse, et l'autre, dite pièce interne, est destinée à être fixée audit équipement vibrant ou à son support, lesdites pièces interne et externe étant reliées l'une à l'autre par au moins un plot d'isolation en élastomère, atténuant par sa déformation suivant au moins un de ses axes en traction, compression ou cisaillement, la transmission de vibrations de faible amplitude générées par ledit équipement, chaque module d'isolation comprenant également une butée souple latérale, et deux butées souples longitudinales actives en sens opposés, chaque butée souple étant montée sur l'une seulement des pièces interne et externe, et ayant une extrémité libre en vis-à-vis de l'autre desdites pièces interne et externe et sans contact avec ladite autre pièce au repos.

Le terme « longitudinal » désigne ici la normale au plan de pose de l'équipement ou toute direction inclinée sur le plan de pose mais avec une composante principale normale à ce dernier, et le terme « latéral » désigne toute direction perpendiculaire à la direction « longitudinale ».

Avantageusement, les butées souples des modules d'isolation comprennent chacune au moins un élément en élastomère venant en contact avec ladite autre pièce rigide en vis-à-vis, en position active de la butée souple, lors de déformations d'amplitude suffisante du ou des plots d'isolation de sorte que l'élément en élastomère de la butée souple travaille en compression lorsque la butée est active.

Ainsi, dans une réalisation particulière de butée souple suivant l'invention, au moins une butée souple d'au moins un module peut être constituée d'un élément en élastomère fixé sur ladite pièce externe de sorte que cet élément soit en vis-à-vis de ladite pièce interne, sans contact avec elle au repos. De façon avantageuse, de façon connue en soi la partie de ladite pièce interne en vis-à-vis dudit élément en élastomère est constituée d'un bossage métallique de ladite pièce interne, afin de réduire le jeu entre ladite butée souple et ladite pièce rigide en vis-à-vis.

Dans une autre réalisation particulière de butée souple suivant l'invention, au moins une butée souple d'au moins un module peut comprendre une partie rigide qui est constituée d'un bossage métallique de la pièce du module portant la butée, ce bossage portant l'élément en élastomère de la butée.

De préférence, la raideur des éléments en élastomère des butées souples est significativement plus grande que celle des plots d'isolation suivant l'axe de compression de la butée, typiquement de l'ordre de 5 à 50 fois. Ainsi, la caractéristique en raideur de l'ensemble constitué par un plot d'isolation et une butée souple suivant un axe où tous deux se déforment est telle que les mouvements relatifs des deux pièces rigides du module d'isolation sont atténués suivant cet axe selon des caractéristiques propres aux deux régimes de fonctionnement : butée inactive et butée active, correspondant respectivement aux petits et grands déplacements relatifs desdites pièces rigides, avec une transition douce entre les deux régimes. Cette transition douce est assurée par les caractéristiques de raideur des trois éléments suivants : le plot d'isolation en élastomère suivant au moins un de ses axes en traction, compression ou cisaillement, la partie en élastomère de la butée souple agissant en compression suivant l'axe de déformation dudit plot, et la partie rigide de la pièce structurale en vis-à-vis de la butée souple.

Aux petits déplacements, seule la raideur du ou des plots d'isolation suivant au moins un de ses ou leurs axes de déformation est active, suivant une caractéristique avantageusement linéaire. Aux plus grands déplacements, lorsqu'au moins une butée souple devient active, la raideur de son élément en élastomère agit en parallèle à la raideur du ou des plots d'isolation, et devient dominante. Lorsque la compression devient importante, l'élément en élastomère de la ou des butées souples actives atteint sa caractéristique de raideur non linéaire, puis sa limite de déformation. A ce point, toute charge supplémentaire induit une déformation d'une éventuelle partie métallique de la butée souple supportant son ou ses éléments souples, et de la partie de la pièce métallique en vis-à-vis de la butée souple. Afin de bénéficier d'une certaine souplesse de ces parties métalliques pour atténuer les fortes charges dynamiques, il sera avantageux que la section de la partie en élastomère de la butée souple soit de dimension convenable : pas trop grande pour assurer une certaine souplesse, pas trop petite pour éviter toute déformation non élastique, voire une rupture. En ce sens, ladite section constitue un élément de réglage du dispositif.

Dans un premier mode avantageux de réalisation, le dispositif d'isolation selon l'invention est tel que ladite pièce externe de chaque module a une forme d'étrier, ce qui permet d'implanter facilement les différents plots d'isolation et butées souples entre les pièces interne et externe.

De plus, ledit élément en élastomère desdites trois butées souples d'au moins un module peut être fixé sur ladite pièce externe. Dans ce cas, lesdits éléments en élastomère des trois butées souples d'au moins un module, et de préférence de chacun d'eux, sont avantageusement réunis en une seule couche d'élastomère fixée sans discontinuité sur une surface interne de la pièce externe. Plus avantageusement encore, l'ensemble constitué dudit ou desdits plots d'isolation et desdits éléments en élastomère desdites trois butées souples d'au moins un module est constitué d'un seul bloc d'élastomère sans discontinuité, ce qui facilite la réalisation des modules d'isolation.

Il peut être alors avantageux que l'une au moins desdites butées d'au moins un module, et de préférence de chacun d'eux, coopèrent avec une partie rigide qui est constituée par exemple, d'un bossage métallique de la pièce interne dudit module.

Il est de plus avantageux, pour simplifier la conception du dispositif, que lesdits modules d'isolation soient sensiblement identiques. Chaque module d'isolation peut comporter un seul plot d'isolation en élastomère, qui est longitudinal. Mais de préférence, chaque module comporte deux plots d'isolation longitudinaux en élastomère, disposés de part et d'autre de la pièce interne, en position sensiblement symétrique, les deux plots étant de même géométrie et de même raideur.

Dans l'exemple précédent, il peut être en outre avantageux que chaque module d'isolation comporte de plus un plot d'isolation latéral en élastomère. Ce plot latéral est disposé, de préférence, avec son axe de compression sensiblement parallèle à celui de la butée souple latérale.

Dans une autre variante, chaque module d'isolation comporte un seul plot d'isolation en élastomère, qui est latéral.

Avantageusement, dans les modes de réalisation présentés ci-dessus, les deux butées souples longitudinales sont disposées de façon sensiblement symétrique, et ont les mêmes caractéristiques au moins en terme de raideur, jeu, et surface de contact.

Dans chaque module d'isolation, il est possible que l'angle entre la direction d'action de chaque butée longitudinale et la direction d'action de la butée latérale soit égal à 90°.

Mais, en variante, il est également possible, voire avantageux, que l'angle entre la direction d'action de chaque butée longitudinale et la direction d'action de la butée latérale soit différent de 90°, mais non nul, et typiquement plus grand que 10°.

En outre, dans chaque module d'isolation, il est avantageux que les axes des butées longitudinale et du ou des plots d'isolation longitudinaux soient sensiblement parallèles.

De même, dans chaque module d'isolation, l'axe de la butée latérale et l'axe du plot d'isolation latéral sont avantageusement sensiblement parallèles. En outre, il est avantageux que dans chaque module d'isolation, les butées longitudinales soient le plus éloignées possibles du point de fixation de l'équipement ou de son support.

Dans ces différentes variantes, le dispositif est avantageusement équilibré si, de plus, il comprend ou est constitué de trois modules identiques, disposés aux sommets d'un triangle de préférence équilatéral.

Mais, pour faciliter le montage et le réglage, le dispositif peut aussi comprendre ou être constitué de quatre modules identiques, disposés de préférence aux sommets d'un carré et orientés, de préférence, de façon symétrique suivant les diagonales du carré.

Avantageusement, dans toutes les variantes de réalisation, les plans de fixation des pièces internes des modules à l'équipement ou au support d'équipement peuvent être sensiblement confondus.

De même, pour simplifier la réalisation, les plots d'isolation et les butées souples ont au moins une forme standard, de préférence sensiblement cylindrique ou parallélépipédique, les dimensions des différents plots et butées n'étant pas nécessairement identiques.

En variante, les plots d'isolation et les butées souples sont emboîtés l'un dans l'autre, l'un étant un cylindre par exemple, et l'autre un anneau ou une partie annulaire entourant le cylindre, de sorte à optimiser l'encombrement du dispositif.

Selon des variantes de réalisation préférées les angles entre, d'une part, les plans médians des parties externes desdites pièces internes en vis-à-vis desdites pièces externes, et, d'autre part, le plan de pose de l'équipement sont non nuls, ou au contraire, sont nuls.

Ainsi, il est possible que lesdits angles, de préférence égaux, sont tels que le centre de gravité de l'équipement à isoler est situé près des plans médians desdites pièces internes des modules d'isolation afin, avantageusement, de favoriser l'isolation des modes de basculement de l'équipement.

Mais il est, au contraire, également possible que lesdits angles, de préférence égaux, sont tels que le centre de gravité de l'équipement à isoler est, de préférence, situé loin des plans médians desdites pièces internes des modules d'isolation afin, de manière autrement avantageuse, de favoriser le découplage en fréquence entre les modes de suspension du dispositif d'isolation et les modes propres de vibration de l'équipement.

Dans toutes les variantes de réalisation, il est avantageux que les modes de suspension du dispositif d'isolation soient inférieurs à ceux de l'équipement à isoler, d'un facteur 2 au minimum.

Avantageusement en outre, les caractéristiques des plots d'isolation, en termes de section, hauteur, module viscoélastique, angles entre les plots longitudinaux et le plan médian de la pièce interne, angles entre les plans médians des pièces internes et le plan de pose de l'équipement sur les pièces internes desdits modules d'isolation, sont choisis afin d'assurer que les fonctions fréquentielles de transmissibilité des efforts en force et couple selon les trois axes d'un trièdre de référence aux petits mouvements, en deçà de la position active des butées souples, correspondent à un gabarit spécifié, de sorte que, par exemple, les vibrations de faibles amplitudes en force et couple transmises par l'équipement à la structure porteuse soient correctement filtrées au-delà d'une certaine fréquence, et que les forces et couples utiles générés par l'équipement soient transmis sans déformation préjudiciable.

De manière analogue, les caractéristiques des butées souples en termes de section, hauteur d'élastomère, module viscoélastique de l'élastomère, dimension de l'interstice entre la butée souple et la pièce en vis-à-vis, sont telles qu'une déformation trop importante des plots d'isolation lors de fortes charges appliquées au dispositif est avantageusement évitée, empêchant ainsi toute détérioration ou phénomène irréversible indésirable, et simultanément, les fonctions fréquentielles de transmissibilité des efforts en force et couple selon les trois axes dans toute la plage de fonctionnement prévue pour le dispositif correspondent à un gabarit spécifié, de sorte que les vibrations et chocs de grandes amplitudes en force et couple transmis par la structure porteuse à l'équipement soient avantageusement correctement filtrés.

Avantageusement aussi, le jeu de butées longitudinales (ou interstice entre chacune d'elles et la pièce en vis-à-vis) de chaque module peut ne représenter qu'environ 0,5% à quelques pourcents (%) de la plus petite distance séparant deux butées longitudinales de deux modules d'isolation distincts, par exemple voisins.

Le dispositif d'isolation peut, avantageusement, comprendre, de plus, au moins un drain thermique souple, reliant les pièces interne et externe d'au moins un module d'isolation, afin de transférer efficacement la chaleur de l'équipement vers la structure porteuse.

De plus, les pièces internes des modules d'isolation peuvent faire corps et être d'une seule pièce avec ledit équipement ou support porte équipement, en variante.

Avantageusement, en outre, l'élastomère utilisé pour les plots d'isolation et pour les butées souples est le même.

L'invention concerne également une application du dispositif d'isolation tel que présenté ci-dessus et qui se **caractérise en ce que** l'équipement est un équipement spatial embarqué à bord d'un satellite, ledit équipement comprenant au moins une partie tournante générant des vibrations, comme par exemple l'un au moins des équipements suivants : roue de réaction, roue cinétique, roue d'inertie, roue à stockage d'énergie, gyrodyne ou actionneur gyroscopique ou CMG, ledit équipement muni de son dispositif d'isolation devant résister aux charges statiques et dynamiques tels que vibrations, chocs, qu'il subit au lancement du satellite.

L'application du dispositif d'isolation peut également être telle que l'équipement est un équipement spatial embarqué à bord d'un satellite, ledit équipement comprenant au moins une partie animée en translation d'un mouvement comprenant au moins une composante temporelle périodique dans le temps générant des vibrations, comme par exemple un compresseur utilisé pour générer du froid, ledit équipement muni de son dispositif d'isolation devant résister aux charges statiques et dynamiques telles que vibrations, chocs qu'il subit au lancement du satellite.

Dans une telle application du dispositif d'isolation, le dispositif d'isolation peut servir à isoler un ensemble d'équipements dont un au moins est perturbateur, tous montés sur un même plateau porte-équipements, ou encore le dispositif peut servir à isoler une partie d'un satellite, par exemple un module de service vis-à-vis d'une autre partie du satellite, par exemple une charge utile.

D'autres caractéristiques et avantages de l'invention ressortiront de la description donnée ci-dessous, à titre non limitatif, d'exemples de réalisation décrits en référence aux dessins annexés sur lesquels :
- la figure 1a est une vue schématique en partie en élévation latérale et en partie en coupe d'un premier exemple partiel de module d'un dispositif d'isolation selon l'invention, se montant entre une structure porteuse et un porte équipement supportant au moins un équipement vibrant, pour expliquer la courbe de la figure 1b;
- la figure 1b représente la courbe de raideur de l'ensemble du plot d'isolation en élastomère et d'une butée souple parallèle au plot dans le module de la figure 1a ;
- la figure 2 est une vue analogue à la figure 1a d'un deuxième exemple de module d'isolation d'un dispositif selon l'invention ;
- la figure 3 est une vue schématique en plan, représentant partiellement un dispositif d'isolation à trois modules selon l'invention ;
- la figure 4 est une vue analogue à la figure 3 d'un dispositif à quatre modules d'isolation selon l'invention ;
- la figure 5 est une vue analogue à la figure 2 d'un troisième exemple de module d'un dispositif d'isolation selon l'invention ;
- la figure 6 est une vue analogue à la figure 2 d'un quatrième exemple de module d'un dispositif d'isolation, qui est une variante de ceux des figures 2 et 5 ;
- la figure 7a est une vue schématique d'un exemple de dispositif d'isolation équipé de modules selon la figure 6, dont les butées souples ne sont pas représentées pour simplifier la représentation ;
- la figure 7b est une vue schématique d'un cinquième exemple de module d'isolation, qui est une variante de celui de la figure 2, avec une inclinaison de la partie externe de la pièce interne du module ;
- la figure 8 est une vue schématique d'une variante du dispositif d'isolation selon la figure 7a ;
- la figure 9 est une vue schématique d'un sixième exemple de module d'isolation, qui est une variante de ceux des figures 5 et 7b ;
- la figure 10 est une vue schématique en perspective de la pièce interne d'un autre exemple de module de dispositif d'isolation;
- la figure 11 est une vue analogue à la figure 5 d'encore un autre exemple de module d'un dispositif d'isolation selon l'invention,
- la figure 12 est une vue schématique en coupe d'un dispositif à insert de fixation de l'art antérieur selon JP 2000 145 889, et
- la figure 13 est une vue analogue à la figure 12 et représentant l'effet d'un basculement de la pièce interne par rapport à la pièce externe d'un dispositif à insert de fixation selon l'art antérieur de la figure 12,
- la figure 14 est une vue analogue à la figure 7a d'un dispositif d'isolation équipé de modules selon la figure 5, représentant la déformation des plots d'isolation et l'effet des butées souples longitudinales lors d'un basculement de l'équipement par rapport à la structure porteuse ;
- la figure 15 est une vue analogue à la figure 7a montrant l'effet des butées souples latérales lors d'une translation latérale de l'équipement par rapport à la structure porteuse.

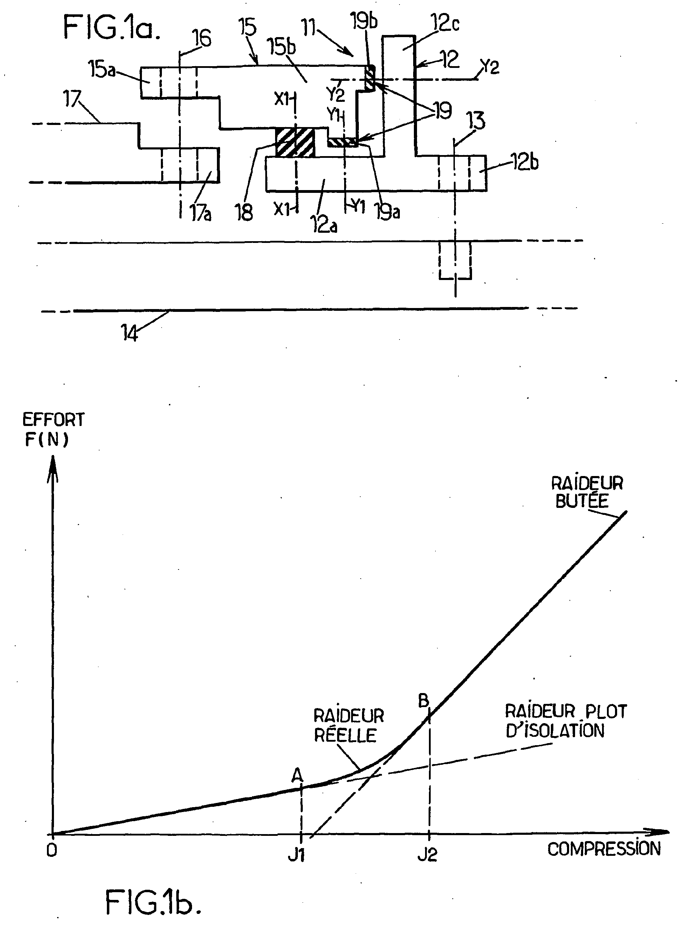

La figure 1a est donnée à titre illustratif pour expliquer le principe de base de l'invention. Cette figure représente schématiquement un module 11 d'un dispositif d'isolation multi-axes modulaire selon l'invention, pour un équipement générateur de vibrations (non représenté) embarqué à bord d'un satellite et fixé sur un plateau porte-équipements 17 qui est suspendu, par plusieurs modules 11 avantageusement identiques les uns aux autres, sur une structure porteuse 14, telle que la structure interne d'un module de service du satellite.

Comme montré ci-après sur d'autres applications pratiques du principe de l'invention, ce dispositif a pour avantage que les modules d'isolation 11 sont indépendants les uns des autres et très simples à concevoir, à réaliser et à monter à la périphérie de l'équipement vibrant et du plateau 17 qui le porte. Chaque module 11 est essentiellement constitué d'une pièce rigide dite externe 12, dans cet exemple en forme générale de ⊥, mais pouvant être généralement en forme d'étrier, qui est à fixer à la structure porteuse 14 du satellite, par une liaison par exemple vissée ou boulonnée schématisée en 13 par l'axe de cette liaison à l'aile dite externe 12b de la pièce externe 12, et une pièce rigide dite interne 15, présentant une partie dite interne 15a qui est à fixer à l'équipement vibrant ou son support, à savoir le plateau porte-équipements 17, par une liaison vissée ou boulonnée également non représentée de manière détaillée, mais schématisée en 16 par l'axe de cette liaison de la partie interne 15a à une bride 17a de fixation du plateau 17, et une autre partie, dite externe 15b de la pièce interne 15 est reliée à la pièce externe 12 par l'intermédiaire d'un ou plusieurs plots d'isolation 18 en élastomère, dans cet exemple par un seul plot 18 longitudinal relié à l'aile interne 12a de la pièce externe 12, la pièce interne 15 n'ayant pas d'autre contact permanent avec la pièce externe 12 que ce ou ces plots d'isolation 18, dont les déformations en compression-traction, selon son ou leur axe longitudinal X₁ X₁, et/ou en cisaillement, dans un plan perpendiculaire à l'axe X₁ X₁, permettent d'atténuer la transmission de vibrations et chocs de faible amplitude générés par l'équipement sur le plateau 17 à la structure porteuse 14, et correspondant à des déplacements relatifs de faible amplitude des pièces externe et interne 12 et 15 du module 11.

Afin de limiter les déformations d'au moins un plot d'isolation tel que le plot 18, au moins en compression selon son axe X₁ X₁, et/ou en cisaillement selon un axe perpendiculaire à X₁ X₁ , lorsque la structure porteuse 14 est soumise à de fortes accélérations lors de la phase de lancement du satellite, et dans le même temps, amortir les chocs et vibrations transmis à l'équipement fixé sur le plateau 17, lors de cette phase, chaque module 11 du dispositif d'isolation comprend en outre dans cet exemple, deux butées souples 19, dont l'une 19a dite longitudinale est disposée parallèlement au plot d'isolation 18,c'est-à-dire de sorte que son axe de compression Y₁ Y₁ est sensiblement parallèle à l'axe X₁ X₁ du plot 18, et assez près du plot 18. Chaque butée souple 19 comprend au moins une partie en élastomère, dont la raideur est bien plus importante que celle du ou des plots d'isolation 18, typiquement dans un rapport d'environ 5 à environ 50. Chaque butée souple 19 peut éventuellement comprendre une armature rigide, faisant corps (par fixation inamovible par exemple) avec l'une seulement des pièces interne 12 et externe 15 du module d'isolation 11 correspondant, et supportant au moins une couche d'élastomère recouvrant cette armature rigide. La partie en élastomère de chaque butée souple 19 est, par son extrémité libre, en vis-à-vis de l'autre pièce interne 15 ou externe 12 du module 11 à laquelle cette butée 19 n'est pas fixée et sans contact avec cette autre pièce 15 ou 12, lorsque le dispositif est au repos, et donc la butée souple 19 en position inactive.

Dans cet exemple, chacune des deux butées souples 19 est fixée à la partie externe 15b de la pièce interne 15, l'une 19a sur la face de cette partie externe 15b à laquelle est également fixé le plot 18, et de sorte que son axe de compression Y₁ Y₁ est parallèle à l'axe de compression-traction X₁ X₁ du plot 18, et son extrémité libre en vis-à-vis de l'aile interne 12a de la pièce externe 12, et l'autre est une butée souple 19b latérale, sensiblement dans le prolongement latéral de la partie externe 15b, et d'axe de compression Y₂ Y₂ sensiblement perpendiculaire aux axes X₁ X₁ et Y₁ Y₁, et dont l'extrémité libre est en vis-à-vis de la branche 12c de la pièce externe 12.

Le contact de la butée souple 19a par son élément en élastomère avec l'aile interne 12a de la pièce externe 12, en position active de la butée 19a, n'est établi que pour une déformation en compression suffisante du plot d'isolation 18, cette déformation étant plus grande que les déformations maximales en compression rencontrées lors du fonctionnement normale de l'équipement sur le satellite en orbite.

Le contact de la butée souple latérale 19b avec la branche 12c de la pièce externe 12 n'est établi que pour une déformation en cisaillement suffisante du plot d'isolation 18, qui est bien plus grande que les déformations maximales en cisaillement rencontrées lors du fonctionnement normal de l'équipement sur le satellite en orbite.

En position active de l'une et/ou l'autre des butées souples 19a et 19b, la compression de leur élément en élastomère permet d'atténuer la transmission des chocs et vibrations de grande amplitude, depuis la structure porteuse 14 vers l'équipement sur le plateau 17, lors du lancement du satellite notamment.

Ce dispositif d'isolation est conforme à l'invention si pour chaque module, une deuxième butée souple longitudinale telle que 19a est montée sur la face supérieure (sur la figure 1a) de la partie externe 15a de la pièce interne 15, par exemple symétriquement à la butée 19a. Le dispositif d'isolation est ainsi constitué d'au moins trois modules 11 d'isolation, chacun composé d'une pièce interne 12 et d'une pièce externe 15 reliées par un ou plusieurs plots d'isolation 18 en élastomère, et, parallèlement à des directions de déformation de ce plot ou de l'un au moins de ces plots 18, de trois butées souples 19 ayant au moins une partie en élastomère, et permet de réaliser, grâce à une raideur combinée d'au moins un plot d'isolation 18 selon au moins un de ses axes de déformation et d'au moins une butée souple 19 associée, dont les axes de compression tels que X₁ X₁ et Y₁ Y₁ sont sensiblement parallèles audit axe de déformation, raideur combinée qui est faible aux petits déplacements relatifs des pièces 12 et 15, forte aux grands déplacements relatifs de ces pièces 12 et 15, et sans discontinuité mais avec une transition progressive et douce entre les deux régimes de fonctionnement correspondants respectivement à ces petits et grands déplacements, à la fois l'atténuation des effets de grandes accélérations (chocs ou vibrations) imprimées à la structure porteuse 14 du satellite lors des phases de lancement du satellite, et l'atténuation des petites vibrations générées par l'équipement sur le plateau 17, et transmises à la structure porteuse 14, lors du fonctionnement normal de l'équipement sur le satellite en orbite.

La figure 1b représente schématiquement une courbe de raideur combinée ou réelle d'un ensemble du module 11 constitué d'un plot d'isolation 18 se déformant selon au moins un axe de déformation soit en compression soit en cisaillement, et d'une butée souple 19a ou 19b dont la compression s'effectue parallèlement audit axe de déformation dudit plot d'isolation, cette courbe présentant, aux faibles débattements relatifs des pièces 12 et 15, d'abord une partie linéaire à pente douce, correspondant à la raideur du plot d'isolation 18 selon ledit axe de déformation, et représentée par le segment OA, lorsque le plot 18 seul est déformé, la butée 19 étant inactive, puis, à partir du déplacement J₁ correspondant au jeu de la butée 19a, et qui rend celle-ci active, la raideur évolue selon l'arc AB, représentant la raideur non linéaire produite essentiellement par la partie en élastomère de la butée 19, avec augmentation progressive de la raideur résultant de l'augmentation de sa compression, puis, à partir du déplacement J₂ correspondant à la compression maximum de l'élastomère de la butée 19, la raideur évolue selon la demi droite au-delà de B, avec la raideur très élevée de l'élastomère comprimé au maximum et de l'armature de la butée 19a, laquelle armature n'est pas d'une rigidité infinie, non plus d'ailleurs que la pièce interne 15 qui la supporte, et la pièce externe 12 contre laquelle la butée 19 est comprimée, d'où cette partie de raideur linéaire à forte pente de la courbe. Il faut noter que les pièces interne 15 et externe 12, qui sont généralement métalliques, sont qualifiées de rigide car leur rigidité est nettement supérieurs à celle de l'élastomère des plots 18 et butées souples 19, mais cependant cette rigidité des pièces 12 et 15 n'est pas trop importante, de sorte à permettre un amortissement lorsque la butée 19 atteint sa limite de compression. De plus, la section transversale de chaque butée souple 19 n'est pas trop importante de sorte que la raideur de la partie métallique en vis-à-vis sur la pièce 12 ou 15 à laquelle la butée 19 n'est pas fixée, est acceptable et participe à l'atténuation des chocs et vibrations de grandes amplitudes.

Un des intérêts de l'invention, en plus de ceux qui apparaîtront ci-dessous au cours de la description, est bien de réaliser ces deux objectifs en apparence contradictoires : atténuation de petites vibrations et atténuation de grandes vibrations, grâce à un seul et même dispositif simple et très compact, alors même que le rapport entre les deux régimes de vibrations en terme d'accélération par exemple est d'un facteur 100 à 1000.

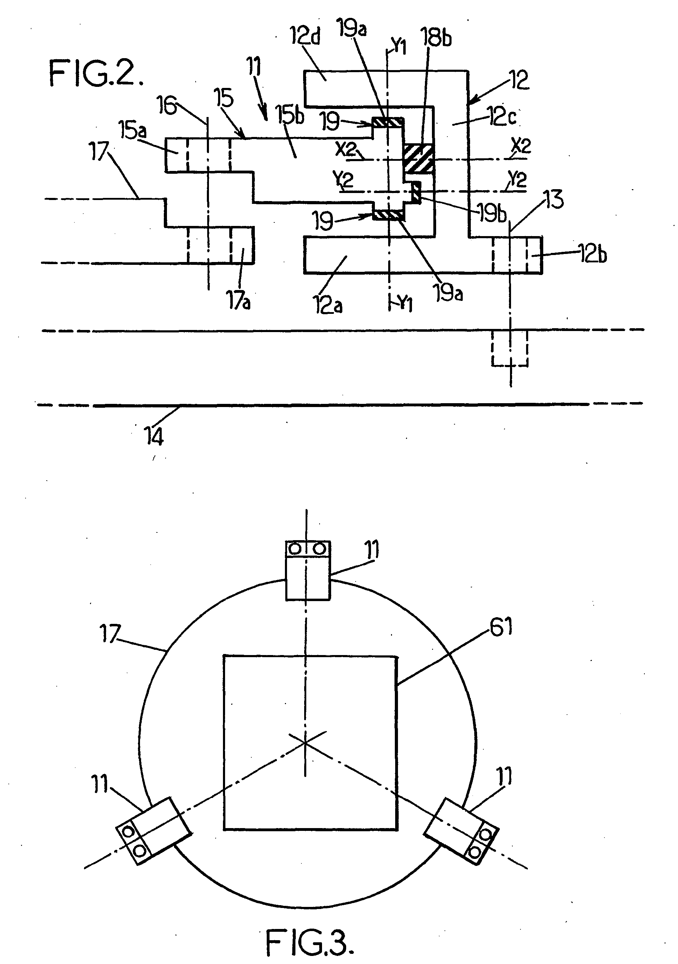

Dans une réalisation très simple du dispositif, celui-ci est constitué d'au moins trois modules 11 d'isolation, avantageusement identiques, bien que cela ne soit pas obligatoire, indépendants dans leur fixation sur la structure porteuse 14 du satellite et répartis autour de cette structure 14, et disposés par exemple aux sommets d'un triangle, avantageusement équilatéral, comme illustré sur la figure 3, ce qui assure une isolation multi-axes de l'équipement vibrant 61 monté sur le plateau porte-équipements 17.

Dans le second exemple de réalisation selon l'invention, représenté sur la figure 2, chaque module 11 comprend également :
- une pièce externe 12, relativement rigide, par exemple métallique, mais dans cet exemple en forme d'étrier à deux ailes internes parallèles 12a et 12d aux extrémités de la branche 12c, et une aile externe 12b destinée à être fixée par la liaison schématisée en 13 sur la structure porteuse 14 du satellite,
- une pièce interne 15, relativement rigide, par exemple métallique, dont une partie interne 15a est destinée à être fixée par la liaison schématisée en 16 à l'équipement vibrant ou au plateau porte-équipements 17 qui le supporte, la pièce interne 15 ayant également une partie externe 15b qui est engagée dans la partie en étrier 12a-12c-12d de la pièce externe 12, et
- un plot d'isolation en élastomère 18, dit plot latéral 18b car fixé latéralement dans le prolongement de la partie externe 15b de la pièce interne 15, et reliant la face de cette partie externe 15b qui est tournée vers la branche 12c à cette branche 12c de la pièce externe 12, les deux pièces interne 15 et externe 12 n'ayant pas d'autre contact permanent au repos que ce plot d'isolation latéral 18b.

Ce module 11 comprend en outre trois butées souples 19, chacune d'une même structure que celle des butées 19 décrites ci-dessus en référence à la figure 1a, et toutes les trois fixées, dans cet exemple, à la seule pièce interne 15 et présentant l'extrémité libre de leur partie en élastomère à faible distance en vis-à-vis de l'une respectivement des faces en regard des ailes 12a et 12d et de la branche 12c de la pièce externe 12, et dont une première butée souple 19b est dite latérale car disposée parallèlement au plot d'isolation latéral 18b (c'est-à-dire avec l'axe de compression Y₂ Y₂ de cette première butée 19b qui est parallèle à l'axe de traction-compression X₂ X₂ du plot latéral 18b), de sorte à limiter la compression du plot latéral 18b, et dont les deux autres butées, souples 19a, dites longitudinales, sont disposées de part et d'autre de la partie externe 15b de la pièce interne 15, de sorte à limiter les déformations en cisaillement du plot d'isolation latéral 18b, les deux butées souples longitudinales 19a étant disposées avantageusement dans des positions symétriques par rapport au plan médian de la pièce externe 15, dans la direction de leur axe commun de compression Y₁ Y₁, qui est une direction perpendiculaire aux axes de compression X₂ X₂ et Y₂ Y₂ du plot d'isolation latéral 18b et de la butée souple latérale 19b.

Dans une réalisation du dispositif d'isolation à trois modules 11 selon la figure 2, l'isolation des vibrations passant à travers le dispositif suivant les six degrés de liberté en forces et couples s'effectue aux petits déplacements, pour lesquels les butées souples 19a et 19b sont inactives, grâce aux déformations des plots d'isolation latéraux 18b suivant les trois axes X₂ X₂ de traction-compression ( 1 axe X₂ X₂ par plot 18, donc par module 11), et les 6 axes de cisaillement (2 par plot 18 donc par module 11, soit un axe parallèle à Y₁ Y₁ et un axe perpendiculaire à Y₁ Y₁ et X₂ X₂), et aux grands déplacements, pour lesquels les butées souples 19a et/ou 19b sont actives, en contact contre la face en regard de la pièce externe 12, grâce aux déformations en compression des butées souples 19a et 19b suivant les 9 axes de compression (1 axe tel que Y₁ Y₁ ou Y₂ Y₂ par butée 19).

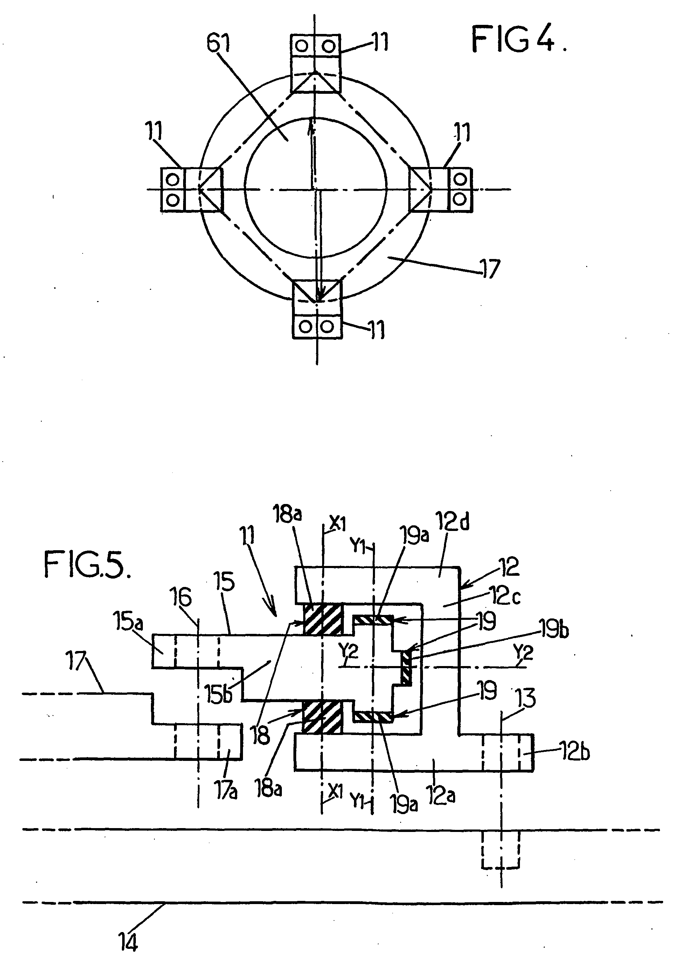

Afin de simplifier la conception de ce dispositif d'isolation, il est souvent avantageux d'utiliser quatre modules d'isolation 11 au lieu de 3, toujours indépendants quant à leur fixation à la périphérie de l'équipement sur la structure porteuse 14 du satellite, et placés par exemple aux quatre sommets d'un carré et symétriquement par rapport aux diagonales de ce carré, comme représenté schématiquement sur la figure 4, sur laquelle l'équipement vibrant 61 est représenté de forme cylindrique sur un porte-équipements 17 en disque circulaire supporté par les pièces internes des quatre modules 11. Dans ce mode de réalisation de l'invention, les différents degrés de liberté en forces et en couples sont alors découplés, et les dimensionnements sont plus simples à réaliser. Ceci illustre le caractère modulaire du dispositif d'isolation selon l'invention, ce qui représente un avantage important de l'invention par rapport à l'état de la technique

Une illustration de la flexibilité procurée par l'invention est donnée par un mode de réalisation différent du dispositif, mais toujours suivant le même principe de l'invention. Dans ce nouvel exemple de réalisation du dispositif, celui-ci est constitué d'une pluralité de modules d'isolation 11 avantageusement, mais non nécessairement, identiques, par exemple trois modules 11 disposés aux sommets d'un triangle équilatéral, comme sur la figure 3, ou quatre modules 11 disposés aux sommets d'un carré, comme sur la figure 4, chaque module 11 étant tel que représenté sur la figure 5 et comprenant :
- une pièce externe 12, en forme d'étrier telle que celle décrite ci-dessus en référence à la figure 2, et également destinée à être fixée par son aile externe 12b sur la structure porteuse 14 du satellite par la liaison 13 ,
- une pièce interne 15, de forme analogue à celle de la pièce interne 15 décrite ci-dessus en référence à la figure 2, et dont la partie interne 15a est destinée à être fixée à l'équipement vibrant ou au porte-équipements 17 qui le supporte par la liaison 16, tandis que sa partie externe 15b est engagée dans l'étrier 12a-12c-12d de la pièce externe 12 et en vis-à-vis des faces en regard sur les deux ailes 12a et 12d et la branche 12c formant l'étrier ;

- deux plots d'isolation 18 en élastomère, dits plots d'isolation longitudinaux 18a, disposés de part et d'autre de la partie externe 15b de la pièce interne 15, de façon symétrique, mais non nécessairement perpendiculaire au plan médian de la pièce interne 15, celle-ci n'ayant pas d'autre contact permanent au repos avec la pièce externe 12 que ces deux plots d'isolation longitudinaux 18a, dont chacun est fixé à l'une respectivement des faces opposées de la partie externe 15b et à la face en regard de l'aile 12a ou 12d du côté correspondant, et
- trois butées souples 19, chacune de même structure que les butées souples 19 des figures 1a et 2 et étant fixées à ou faisant corps avec soit la pièce interne 15 soit la pièce externe 12, et dans cet exemple avec la seule pièce interne 15, comme sur la figure 2, deux 19a de ces butées 19 étant qualifiées de longitudinales et disposées de façon sensiblement parallèles aux plots d'isolation longitudinaux 18a, de part et d'autre de la partie externe 15b de la pièce interne 15, avantageusement dans des positions symétriques, et la troisième butée souple 19b, dite latérale, étant disposée dans le prolongement latéral de la partie externe 15b de la pièce interne, son axe de compression Y₂ Y₂ étant avantageusement dans le plan médian de la pièce interne 15, et avantageusement orienté suivant la bissectrice des axes de traction-compression des deux plots longitudinaux 18a, qui sont, dans cet exemple, confondus dans l'axe de traction-compression commun X₁ X₁. L'axe de compression Y₂ Y₂ de la butée souple latérale 19b est dans cet exemple perpendiculaire aux axes de traction-compression X₁ X₁ et de compression Y₂ Y₂ respectivement des deux plots longitudinaux 18a et des deux butées souples longitudinales 19a.

Dans cette réalisation de l'invention, en supposant que 3 modules 11 à 3 butées souples 19 soient utilisés, l'isolation des vibrations passant à travers le dispositif suivant les 6 degrés de liberté en forces et couples s'effectue aux petits déplacements grâce aux déformations des plots d'isolation 18 suivant les trois axes de traction-compression (un axe tel que X₁ X₁ par module 11), et les 6 axes de cisaillement (2 axes tels que Y₂ Y₂ et un axe perpendiculaire à X₁ X₁ et Y₂ Y₂ par modules 11), et aux grands déplacements grâce aux déformations en compression des butées souples 19, suivant les 9 axes de compression (1 axe tel que Y₁ Y₁ ou Y₂ Y₂ par butées 19).

Dans cette réalisation, il est avantageux que les deux plots longitudinaux 18a de chaque module d'isolation 11 soient exactement identiques en géométrie et raideur, éventuellement appareillés après tests, afin d'équilibrer le dispositif.

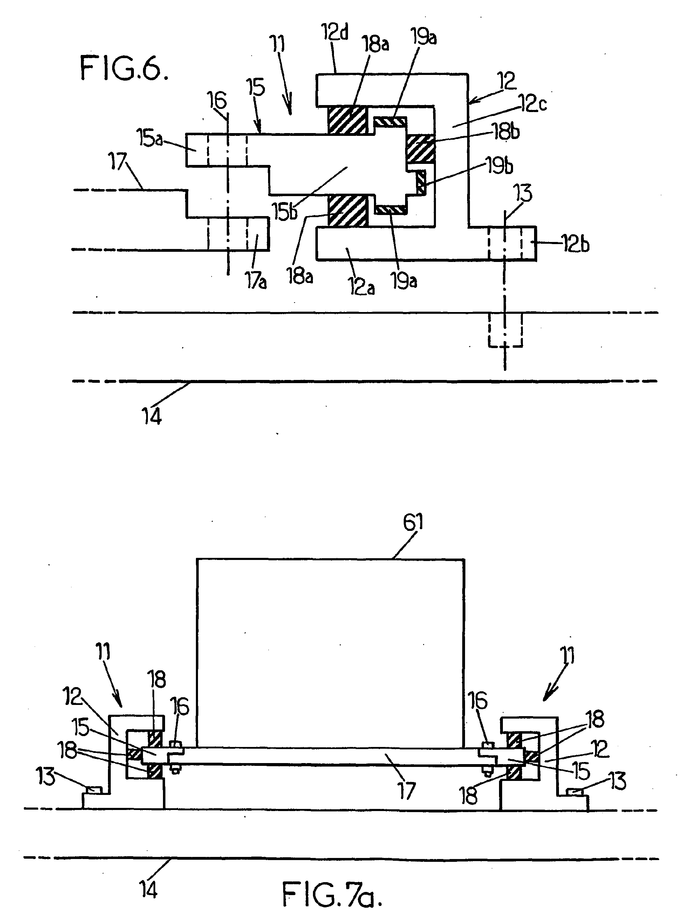

Dans une variante de cette réalisation, comme représentée sur la figure 6, sur laquelle les mêmes références désignent des éléments analogues ou identiques, chaque module 11 comporte en plus un troisième plot d'isolation 18b dit latéral reliant la pièce interne 15 et la pièce externe 12, ce plot 18b étant disposé, comme le plot 18b de la figure 2, dans le prolongement de la partie externe 15b de la pièce interne 15 faisant face à la branche 12c de l'étrier de la pièce externe 12.

Pour l'ensemble des variantes de réalisation de l'invention, il est toujours avantageux que les plans de fixation des pièces internes 15 des modules d'isolation 11 à l'équipement 61 ou au support d'équipement 17 soient confondus, comme indiqué de façon simplifiée sur la figure 7a, qui représente schématiquement un dispositif d'isolation à plusieurs modules 11 selon la figure 6, dont les butées souples 19 n'ont pas été représentées par simplification du dessin. Ces plans de fixation sont définis sur les figures 1a, 2 et 5 par les plans de contact des faces en regard de la partie interne 15a des pièces internes 15 et de la bride de fixation 17a du support d'équipement 17 sous l'action de la liaison 16, représentée sur la figure 7a sous la forme d'une liaison boulonnée.

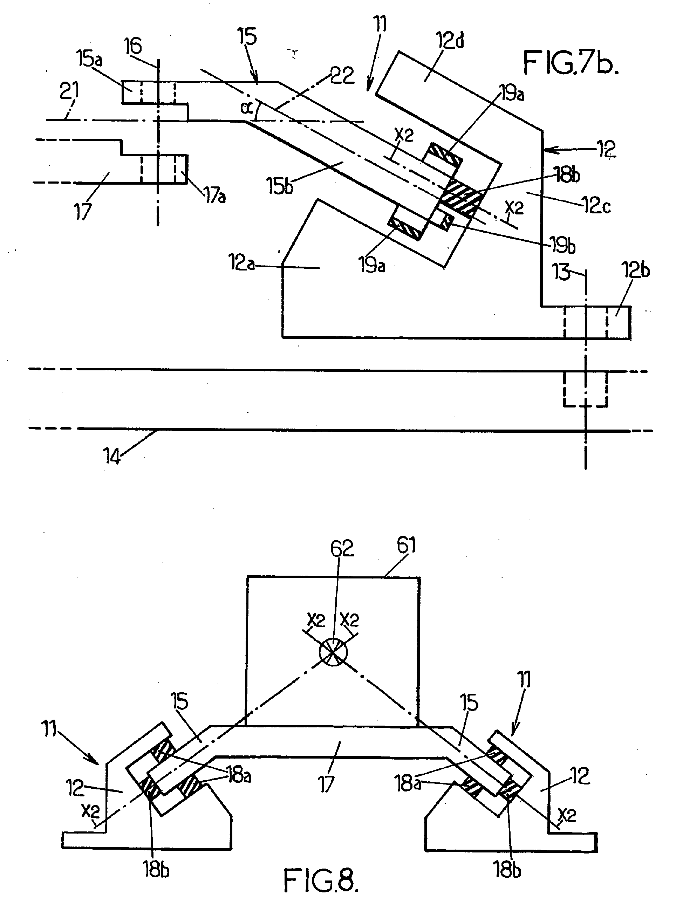

En outre, il peut être avantageux également de considérer des pièces internes 12 ayant des formes non pas rectilignes, comme représenté par exemple sur les figures_2, 5 ou 6, mais, comme illustré sur le module 11 de la figure 7b qui correspond à une variante de celui de la figure 2, telles que le plan médian 22 de la partie externe 15b de la pièce interne 15 en vis-à-vis de la pièce externe 12 ou engagée dans l'étrier de la pièce externe 12 fasse un angle α non nul avec le plan de pose 21 de l'équipement 61 ou de son support 17. Dans ce cas, l'étrier défini par les ailes 12a et 12d et la branche 12c de la pièce externe 12 est incliné du même angle, afin d'assurer le même fonctionnement du plot latéral 18b et des trois butées souples 19 (dont deux longitudinales 19a et une latérale 19b) entre la partie externe 15b et l'étrier 12a-12c-12d que sur la figure 2.

Ainsi, on peut rapprocher le centre de gravité ou de masse 62 de l'équipement 61 des axes de compression X₂ X₂ des plots d'isolation latéraux 18b des différents modules 11 d'un dispositif, comme représenté sur la figure 8, qui montre un dispositif équipé de modules 11 selon la figure 6, avec étrier incliné et partie externe 15b de la pièce interne inclinée comme sur la figure 7b, ce qui favorise spécifiquement l'atténuation des effets des couples de vibration engendrés par l'équipement 61 du fait que ces couples sont repris essentiellement par la compression des plots d'isolation 18. De même, cet angle α peut être utilisé pour, au contraire, éloigner le centre de masse 62 de l'équipement 61 des axes de compression des plots d'isolation 18,' ce qui favorise plutôt le découplage fréquentiel entre l'équipement 61 et la structure porteuse 14. Ceci illustre encore la flexibilité de réalisation que procure l'invention.

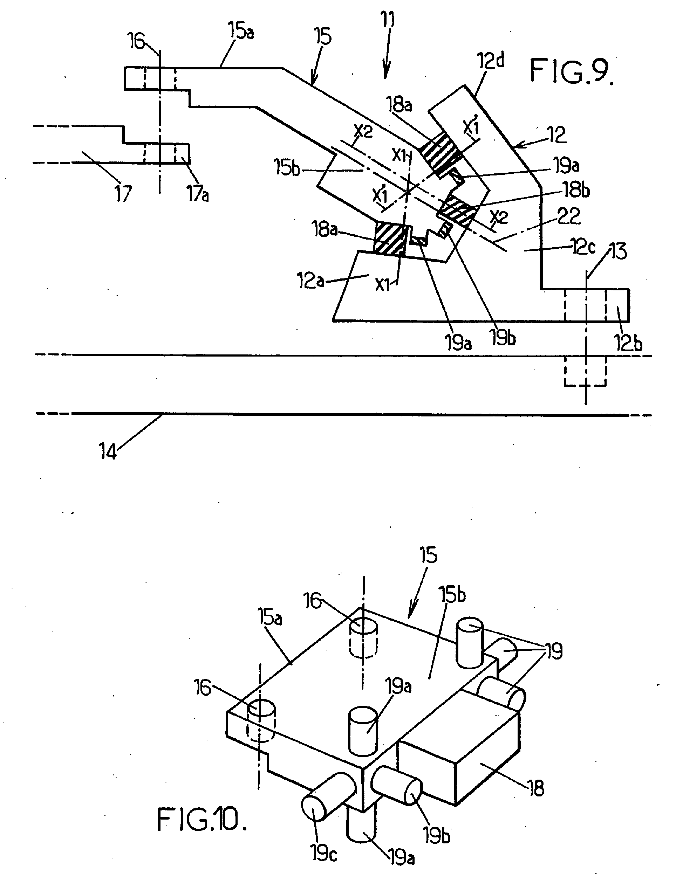

En outre, il peut être avantageux pour l'ensemble de ces variantes d'avoir un angle non droit entre l'axe tel que X₁ X₁ et X'₁ X'₁ de compression des plots d'isolation longitudinaux 18a et l'axe de compression tel que X₂ X₂ (qui est avantageusement la bissectrice de l'angle des axes X₁ X₁ et X'₁ X'₁) du plot latéral 18b ou des plots latéraux le cas échéant, comme illustré sur la figure 9 qui représente un type très général de module 11 d'isolation suivant l'invention, correspondant à une variante du module 11 de la figure 6 avec partie externe 15b de la pièce interne 15 et étrier de la pièce externe 12 qui sont inclinés comme sur la figure 7b, mais avec des faces en regard des 2 ailes 12a et 12d de l'étrier qui ne sont pas parallèles entre elles mais forment un angle aigu, de sorte que les mêmes références désignent des éléments analogues ou identiques.

Même dans cette variante la plus complète, les caractéristiques de l'invention sont nettement illustrées : simplicité, compacité, modularité pour un dispositif qui doit remplir un nombre important de fonctions : atténuation des petites vibrations de l'équipement 61, atténuation des grandes accélérations imprimées à la structure porteuse 14, transmission de couples utiles.

Dans le cas où l'équipement 61 à isoler génère des vibrations suivant un nombre réduit de degrés de liberté, comme c'est le cas, par exemple, lorsque seules des forces parasites sont générées principalement dans une seule direction (typiquement dans le cas où l'équipement 61 est un compresseur à piston par exemple), on peut réaliser d'autres variantes du dispositif où seulement deux modules d'isolation 11 sont utilisés pour isoler l'équipement 61. Dans ce cas, le nombre de plots d'isolation 18 et de butées souples 19 doit être suffisant pour atténuer à la fois les petites vibrations générées par l'équipement 61 suivant les degrés de liberté correspondants, et les grandes vibrations au lancement suivant les 6 degrés de liberté en forces et couples. Une illustration de cette configuration est donnée sur la figure 10, où est représentée seulement la pièce interne 15 d'un module d'isolation, avec 8 butées souples 19, et un plot d'isolation 18. Le plot 18 est de forme parallélépipédique, et chaque butée 19 de forme cylindrique. La pièce interne 15, de forme en plan rectangulaire, présente, dans sa partie interne 15a, 2 perçages pour des liaisons 16, et, à chacun des deux coins de sa partie externe 15b, quatre butées souples 19, dont deux longitudinales 19a, symétriques de part et d'autre de la partie externe 15b, et deux latérales 19b et 19c, de sorte à limiter les déformations en compression et en cisaillement du plot 18 dans trois directions perpendiculaires entre elles. Deux modules 11 de cette sorte placés tête bêche permettent d'isoler des forces latérales suivant l'axe de compression des plots d'isolation 18, ainsi que des forces parasites suivant les autres directions de cisaillement des plots 18, tout en supportant les grandes accélérations au lancement.

L'homme de l'art peut aisément réaliser, à partir des éléments donnés dans cette description, d'autres configurations qui permettent d'obtenir les caractéristiques d'isolation souhaitées dans le cas général, en fonction du nombre et du type de degrés de liberté à isoler en force et/ou en couple.

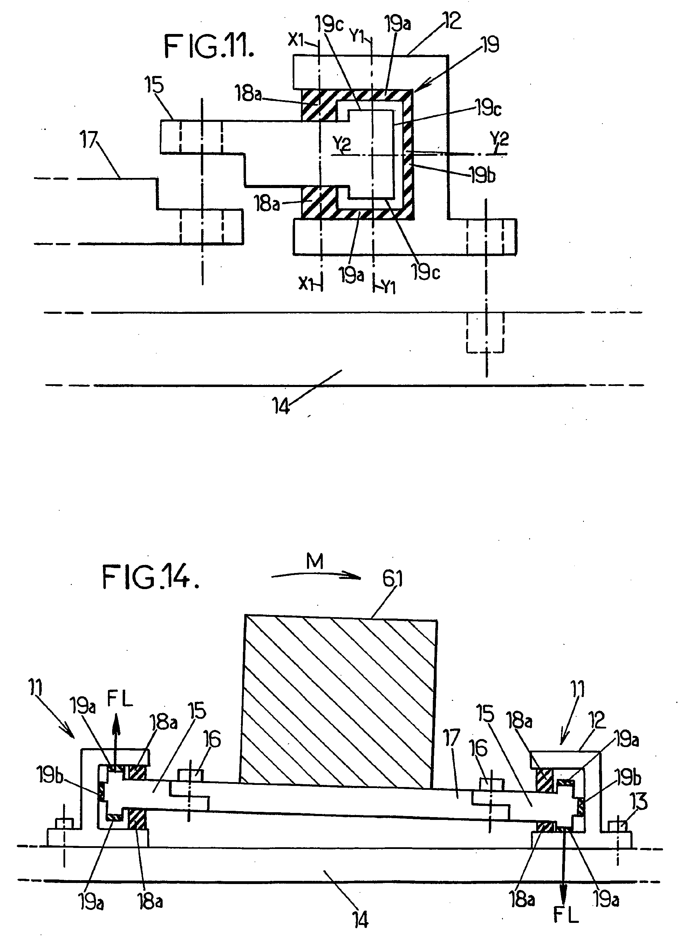

Parmi ces variantes, il est représenté sur la figure 11 une variante préférée de configuration d'un module d'isolation d'un dispositif d'isolation multi-axes suivant l'invention, variante dans laquelle les éléments en élastomère des butées souples 19a et 19b sont montés sur les différentes faces internes de la pièce externe 12, sans discontinuité entre eux, et en formant un seul bloc d'élastomère avec les plots d'isolation 18a longitudinaux, de préférence identiques en géométrie et raideur, et disposés de façon symétrique de part et d'autre de la pièce interne 15, les butées souples longitudinales 19a coopérant, en position active, avec des parties rigides 19c réalisées par bossage de la pièce interne suivant une direction sensiblement parallèle à celle des plots d'isolation longitudinaux 18a, en laissant un jeu entre l'extrémité du bossage et la couche d'élastomère formant la partie souple des butées 19, et la partie rigide 19c de la pièce interne 15 coopérant avec la butée souple latérale 19b étant simplement, dans ce cas, la face externe de la pièce interne 15, sensiblement plane et parallèle (au repos) à la face interne de la pièce externe 12.

Pour toutes ces variantes de réalisation de l'invention, la ou les formes des plots d'isolation 18 et des butées souples 19 peut ou peuvent être choisies sans trop de contraintes, les formes préférées étant parallélépipédiques ou cylindriques pour des raisons de simplicité et de linéarité aux petits déplacements. Dans un souci de rendre le dispositif encore un peu plus compact, au moins une butée souple 19 peut être disposée au centre d'un plot d'isolation 18 ayant la forme d'une couronne ou d'une partie de couronne, par exemple.

Pour chacune de ces variantes, les caractéristiques des plots d'isolation 18, en termes de section, hauteur, module viscoélastique, angles entre les plots longitudinaux 18a et le plan médian de la pièce interne 15, angles entre le plan médian de la pièce interne 15 et le plan de pose 21 de l'équipement 61 sur les pièces internes 15 desdits modules 11 d'isolation, sont choisis afin d'assurer que les fonctions fréquentielles de transmissibilité des efforts en force et couple selon les trois axes aux petits mouvements (en deçà du point de fonctionnement des butées souples 19) correspondent à un gabarit spécifié, de sorte que, par exemple, les vibrations de faibles amplitudes en force et couple transmises par l'équipement 61 à la structure 14 du satellite soient correctement filtrées au-delà d'une fréquence donnée, et que les forces et couples utiles générés par l'équipement 61 soient transmis sans déformation préjudiciable jusqu'à une fréquence donnée.

De même, les caractéristiques des butées souples 19 en termes de section et hauteur d'élastomère, module de viscoélasticité de l'élastomère, dimension de l'interstice entre l'élastomère et la pièce 12 ou 15 en vis-à-vis au repos, sont choisies de telle sorte qu'une déformation trop importante des plots d'isolation 18 lors de fortes charges appliquées au dispositif est évitée, empêchant ainsi toute détérioration ou phénomène irréversible indésirable, et dans le même temps, les fonctions fréquentielles de transmissibilité des efforts en force et couple selon les trois axes dans toute la plage de fonctionnement prévue pour le dispositif correspondent à un gabarit spécifié, de sorte que les vibrations et chocs de grandes amplitudes en force et couple transmises par la structure 14 du satellite à l'équipement 61 soient correctement filtrées.

Il est à noter que pour faciliter la fabrication des modules 11 d'isolation, il est très avantageux d'utiliser le même type d'élastomère pour les plots d'isolation 18 et les butées souples 19.

Dans d'autres variantes du dispositif, on peut mettre en place des drains thermiques très souples entre la partie équipement 17-61 et la structure porteuse 14, afin de favoriser les échanges thermiques qui sont limités naturellement par les plots élastomères 18 mis en place.

On peut également réaliser les pièces internes 15 des modules 11 d'isolation de sorte que ces pièces 15 fassent corps avec l'équipement 61 ou le plateau porte-équipement 17, ce qui rend le dispositif moins modulaire, mais permet plus de compacité (spécification de volume allouable) et d'intégrabilité.

Toutes les variantes du dispositif suivant l'invention décrites précédemment ont des caractéristiques communes avantageuses par rapport à l'état de l'art. Afin de préciser ces avantages, la figure 12 représente un dispositif de l'état de l'art selon le document de brevet JP 2000 145889, constitué d'un insert de fixation comprenant une pièce interne 115, dont l'axe est longitudinal par rapport à l'équipement, et sur laquelle est fixée l'équipement, ladite pièce interne 115 étant reliée à une pièce externe 112 fixée sur la structure porteuse (non représentée ici) par une pluralité de plots d'isolation en élastomère 118, le principe du dispositif selon JP 2000 145889 étant tel que la pièce interne 115 vient en butée sur la pièce externe 112 dès que les contraintes appliquées aux plots d'isolation 118 atteignent des valeurs limites. Suivant ce principe, afin de bloquer les mouvements de la pièce interne 115 selon les trois translations engendrées nécessairement par le déplacement de l'équipement lors des fortes accélérations subies au lancement suivant tous les axes, une pluralité de butées 119 doit être disposée tout autour de ladite pièce interne 115, comme le montre la figure 12 en coupe dans un plan longitudinal, sur laquelle sont représentées les zones de contact des butées 119. Dans cette configuration (rendue donc nécessaire selon JP 2000 145889 pour bloquer toutes les translations), un mouvement en rotation de l'équipement soumis à un fort couple M induira un basculement de la pièce interne 115 par rapport à la pièce externe 112. Or comme le montre la figure 13 qui représente les déformations du dispositif de la figure 12 sous l'effet de tel basculement, non pas une, mais plusieurs butées 119 vont simultanément se mettre en action, même pour de faibles angles de basculement, créant ainsi des efforts locaux FL très importants, de l'ordre de grandeur de M/d, où d est la distance typique entre deux butées 119, soit quelques centimètres dans ce cas. Une telle conception ne résisterait pas à des impacts violents et répétés qu'engendrent des accélérations au lancement allant typiquement de 20-100g (où g est l'accélération du champ de gravité terrestre) dans la gamme 10-100 Hz (vibrations) et 1000g dans la gamme 100-1000Hz (chocs).

Par rapport à cet état de l'art, une des caractéristiques avantageuses du dispositif selon l'invention, qui pourraient être déduites de la figure 7a, est illustrée plus précisément sur la figure 14, dans un cas simplifié mais représentatif. Cette figure 14, semblable dans son ensemble à la figure 7a, représente une vue schématique du dispositif dans laquelle seulement deux modules 11 d'isolation supposés actifs sont représentés avec le détail des plots d'isolation 18a et de butées souples 19a et 19b comme sur la figure 5, l'homme de l'art pouvant aisément généraliser à un nombre plus important de modules 11 (au moins trois suivant l'invention), et à des mouvements plus compliqués. Cette figure 14 schématise le basculement de l'équipement sous l'effet d'un fort couple M. Le mouvement résultant est rapidement bloqué aux faibles angles de basculement par deux butées longitudinales 19a de deux modules 11 distincts, à l'exclusion de tout autre point de contact des autres butées 19 de chaque module 11, du fait de la petitesse relative du jeu des butées longitudinales 19a (typiquement de l'ordre du millimètre) par rapport au bras de levier important que constitue la distance D entre deux butées longitudinales 19a de deux plots d'isolation 11 distincts, soit typiquement de 20 à 40 cm selon la taille de l'équipement ou des équipements à isoler. Dans ce cas, chaque module d'isolation 11 n'est soumis au pire qu'à de simples forces (et non pas des couples locaux contrairement à JP 2000 145889), ces forces créées au niveau des butées 19 étant de l'ordre de grandeur de M/D, soit typiquement 10 fois moins importantes que dans le cas précédent.

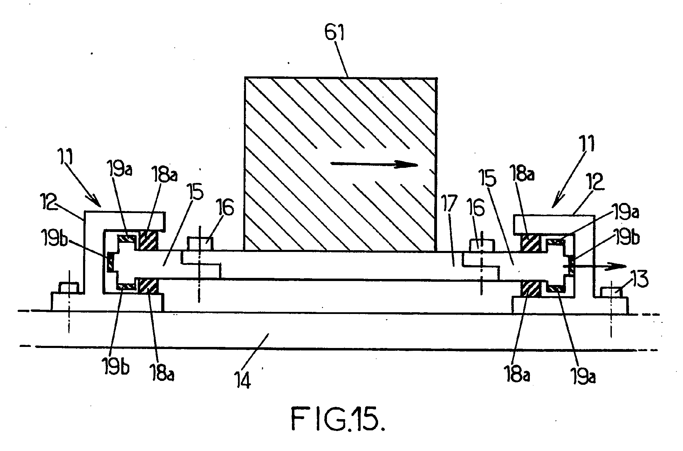

Une autre caractéristique qui différencie avantageusement le dispositif suivant l'invention par rapport à l'état de l'art, en particulier JP 2000 145889, est que selon l'invention, chaque module d'isolation 11 ne comporte qu'une seule butée latérale 19b, et une seule butée 19a dans chaque sens de la direction longitudinale, soit un nombre restreint de trois butées 19 par module 11 ce qui facilite la conception et la réalisation de ces modules 11. En particulier, contrairement aux règles de conception résultant de l'état de l'art antérieur, chaque module d'isolation 11 pris isolément ne résisterait pas à des efforts d'arrachement importants ayant tendance à éloigner la pièce interne 15 par rapport à la pièce externe 12, car seulement une butée latérale 19b est utilisée en compression, pour bloquer le rapprochement de la pièce interne 15 par rapport à la pièce externe 12. Du fait que seulement trois butées 19 sont utilisées par module 11, les pièces externes 12 couramment utilisées suivant l'invention peuvent avoir une forme simple d'étrier, et non pas une forme de mâchoire dans toutes les directions, comme c'est nécessaire dans JP 2000 145889. Cette particularité du dispositif selon l'invention vient du fait que les butées latérales 19b des au moins trois modules d'isolation 11 utilisés dans le dispositif bloquent dans leur ensemble, et non pas individuellement, tous les mouvements de translation de l'équipement suivant n'importe quelle direction latérale. Cette propriété est visualisée schématiquement sur la figure 15, qui représente le même dispositif que sur la figure 14, mais soumis ici à une translation latérale, qui est bloquée par la butée latérale 19b d'un des modules d'isolation 11 bien avant que des efforts trop importants n'arrachent les plots d'isolation 18a de l'autre module 11 qui ne sont pas protégés vis-à-vis de telles translations.

## Revendications

1. Dispositif d'isolation multi-axes d'au moins un équipement (61) générateur de vibrations embarqué sur une structure porteuse (14), telle qu'un satellite, comprenant au moins trois modules d'isolation (11) répartis à la périphérie dudit équipement vibrant (61) ou d'un support (17) de ce dernier, **caractérisé en ce que** chaque module d'isolation comporte deux pièces rigides dont l'une (12), dite pièce externe, est destinée à être fixée à la structure porteuse (14), et l'autre (15), dite pièce interne, est destinée à être fixée audit équipement vibrant (61) ou à son support (17), lesdites pièces interne (15) et externe (12) étant reliées l'une à l'autre par au moins un plot d'isolation (18) en élastomère, atténuant par sa déformation suivant au moins un de ses axes en traction, compression ou cisaillement la transmission de vibrations de faible amplitude générées par ledit équipement (61), chaque module d'isolation (11) comprenant également une butée souple latérale (19b) et deux butées souples longitudinales, actives en sens opposés (19a), chacune étant montée sur l'une seulement des pièces interne (15) et externe (12), et ayant une extrémité libre en vis-à-vis de l'autre desdites pièces interne (15) et externe (12) et sans contact avec ladite autre pièce au repos.

2. Dispositif d'isolation multi-axes selon la revendication 1, **caractérisé en ce que** lesdites butées souples (19) desdits modules d'isolation (11) comprennent chacune au moins un élément en élastomère venant en contact avec ladite autre pièce rigide (12, 15) en vis-à-vis, en position active de la butée souple (19).

3. Dispositif d'isolation multi-axes selon l'une des revendications 1 et 2, **caractérisé en ce que** ladite pièce externe (12) a une forme en étrier.

4. Dispositif d'isolation multi-axes selon la revendication 2 ou 3, **caractérisé en ce que** ledit élément en élastomère desdites trois butées souples (19) d'au moins un module (11) est fixé sur ladite pièce externe (12).

5. Dispositif d'isolation multi-axes selon l'une quelconque des revendications 2 à 4, **caractérisé en ce que** lesdits éléments en élastomère desdites trois butées souples (19) d'au moins un module (11) sont réunis en une seule couche d'élastomère fixée sans discontinuité sur une surface interne de la pièce externe (12).

6. Dispositif d'isolation multi-axes selon l'une quelconque des revendications 2 à 5, **caractérisé en ce que** l'ensemble constitué dudit ou desdits plot(s) d'isolation (18) et desdits éléments en élastomère desdites trois butées souples (19) d'au moins un module (11) est constitué d'un seul bloc d'élastomère sans discontinuité.

7. Dispositif d'isolation multi-axes selon l'une quelconque des revendications 1 à 6, **caractérisé en ce qu'**au moins une butée souple (19) d'au moins un module (11) est constituée d'un élément en élastomère, monté sur l'une seulement desdites pièces interne (15) et externe (12), et ayant une extrémité libre en vis-à-vis de l'autre desdites pièces interne (15) et externe (12) et sans contact avec ladite autre pièce au repos, ladite partie en vis-à-vis dudit élément en élastomère étant constituée d'un bossage métallique de ladite autre pièce interne ou externe.

8. Dispositif d'isolation multi-axes selon l'une quelconque des revendications 1 à 7, **caractérisé en ce que** chaque module d'isolation (11) comporte un seul plot d'isolation en élastomère, qui est longitudinal (18a).

9. Dispositif d'isolation multi-axes selon l'une quelconque des revendications 1 à 7, **caractérisé en ce que** chaque module d'isolation (11) comporte deux plots d'isolation longitudinaux (18a) en élastomère, disposés de part et d'autre de la pièce interne (15), en position sensiblement symétrique, les deux plots (18a) étant de même géométrie et de même raideur.

10. Dispositif d'isolation multi-axes selon la revendication 9, **caractérisé en ce que** chaque module d'isolation (11) comporte de plus un plot d'isolation latéral (18b) en élastomère.

11. Dispositif d'isolation multi-axes selon l'une quelconque des revendications 1 à 7, **caractérisé en ce que** caque module d'isolation (11) comporte un seul plot d'isolation en élastomère, qui est latéral (18b).

12. Dispositif d'isolation multi-axes selon l'une quelconque des revendications 1 à 11, **caractérisé en ce que** les deux butées souples longitudinales (19a) sont disposées de façon sensiblement symétrique, et ont les mêmes caractéristiques au moins en terme de raideur, jeu, surface de contact.

13. Dispositif d'isolation multi-axes selon l'une quelconque des revendications 1 à 12, **caractérisé en ce que**, dans chaque module d'isolation (11), l'angle entre la direction (Y_{1,} Y₁) de chaque butée longitudinale (19a) et la direction (Y_{2,} Y₂) de la butée latérale (19b) est égal à 90°.

14. Dispositif d'isolation multi-axes selon l'une quelconque des revendications 1 à 12, **caractérisé en ce que**, dans chaque module d'isolation (11), l'angle entre la direction de chaque butée longitudinale (19a) et la direction de la butée latérale (19b) est différent de 90°, non nul, et typiquement plus grand que 10°.

15. Dispositif d'isolation multi-axes selon l'une quelconque des revendications 1 à 14, **caractérisé en ce que** dans chaque module d'isolation (11), les butées longitudinales (19a) sont le plus éloignées possibles du point de fixation de l'équipement (61) ou de son support (17).

16. Dispositif d'isolation multi-axes selon l'une quelconque des revendications 1 à 15, **caractérisé en ce qu'**il comprend quatre modules (11) identiques, disposés de préférence aux sommets d'un carré et orientés de préférence de façon symétrique suivant les diagonales du carré.

17. Dispositif d'isolation multi-axes suivant l'une quelconque des revendications 1 à 16, **caractérisé en ce que** les plots d'isolation (18) et les butées souples (19) ont au moins une forme standard, de préférence sensiblement cylindrique ou parallélépipédique, les dimensions des différents plots (18) et butées (19) n'étant pas nécessairement identiques.

18. Dispositif d'isolation multi-axes suivant l'une quelconque des revendications 1 à 17, **caractérisé en ce que** les plots d'isolation (18) et les butées souples (19) sont emboîtés l'un dans l'autre, l'un étant un cylindre par exemple, et l'autre un anneau ou une partie annulaire entourant le cylindre, de sorte à optimiser l'encombrement du dispositif.

19. Dispositif d'isolation multi-axes suivant l'une quelconque des revendications 1 à 18, **caractérisé en ce que** les angles (α) entre, d'une part, les plans médians (22) des parties externes (15b) desdites pièces internes (15) en vis-à-vis desdites pièces externes (12), et, d'autre part, le plan de pose (21) de l'équipement (61) sont non nuls.

20. Dispositif d'isolation multi-axes suivant la revendication 19, **caractérisé en ce que** lesdits angles (α), de préférence égaux, sont tels que le centre de gravité (62) de l'équipement (61) à isoler est situé près des plans médian (22) desdites pièces internes (15) des modules d'isolation (11) afin de favoriser l'isolation des modes de basculement de l'équipement (61).

21. Dispositif d'isolation multi-axes suivant la revendication 19, **caractérisé en ce que** lesdits angles (α), de préférence égaux, sont tels que le centre de gravité (62) de l'équipement (61) à isoler est situé loin des plans médian (22) desdites pièces internes (15) des modules d'isolation (11) afin de favoriser le découplage en fréquence entre les modes de suspension du dispositif d'isolation et les modes propres de vibration de l'équipement (61).

22. Dispositif d'isolation multi-axes suivant l'une quelconque des revendications 1 à 21, **caractérisé en ce que** les modes de suspension du dispositif d'isolation sont inférieurs à ceux de l'équipement (61) à isoler d'un facteur 2 au minimum.

23. Dispositif d'isolation multi-axes suivant l'une quelconque des revendications 1 à 22, **caractérisé en ce que** les caractéristiques des plots d'isolation (18), en termes de section, hauteur, module viscoélastique, angles entre les plots longitudinaux (18) et le plan médian (22) de la pièce interne (15), angles entre les plans médians (22) des pièces internes (15) et le plan de pose (21) de l'équipement (61) sur les pièces internes (15) desdits modules d'isolation (11), sont choisis afin d'assurer que les fonctions fréquentielles de transmissibilité des efforts en force et couple selon les trois axes aux petits mouvements, en deçà de la position active des butées souples (19), correspondent à un gabarit spécifié, de sorte que, par exemple, les vibrations de faibles amplitudes en force et couple transmises par l'équipement (61) à la structure (14) porteuse soient correctement filtrées au-delà d'une certaine fréquence, et que les forces et couples utiles générés par l'équipement (61) soient transmis sans déformation préjudiciable.

24. Dispositif d'isolation multi-axes suivant l'une quelconque des revendications 1 à 23, **caractérisé en ce que** les caractéristiques des butées souples (19), en termes de section, hauteur d'élastomère, module viscoélastique de l'élastomère, dimension de l'interstice entre la butée souple (19) et la pièce (12, 15) en vis-à-vis, sont telles qu'une déformation trop importante des plots d'isolation (18) lors de fortes charges appliquées au dispositif est évitée, empêchant ainsi toute détérioration ou phénomène irréversible indésirable, et simultanément, les fonctions fréquentielles de transmissibilité des efforts en force et couple selon les trois axes dans toute la plage de fonctionnement prévue pour le dispositif correspondent à un gabarit spécifié, de sorte que les vibrations et chocs de grandes amplitudes en force et couple transmis par la structure porteuse (14) à l'équipement (61) soient correctement filtrés.

25. Dispositif d'isolation multi-axes suivant l'une quelconque des revendications 1 à 24, **caractérisé en ce que** le jeu des butées longitudinales (19a) de chaque module d'isolation (11) ne représente que typiquement 0.5 à quelques pourcents de la plus petite distance qui sépare deux butées longitudinales (19a) de deux modules d'isolation (11) distincts.

## Claims

1. A multi-axis isolation device for at least one piece of equipment (61) that generates vibrations installed on board a supporting structure (14), such as a satellite, comprising at least three isolation modules (11) distributed around the periphery of said vibrating equipment (61) or of a support (17) of the latter, **characterized in that** each isolation module comprises two rigid components one of which (12), called external component, is designed to be fixed to the supporting structure (14), and the other of which (15), called internal component, is designed to be fixed to said vibrating equipment (61) or to its support (17), said internal component (15) and external component (12) being connected to one another by at least one isolation stud (18) made from elastomer, attenuating by its deformation along at least one of its axes in traction, compression or shear the transmission of vibrations of low amplitude generated by said equipment (61), each isolation module (11) also comprising a lateral flexible buffer (19b) and two longitudinal flexible buffers, acting in opposing directions (19a), each one being mounted onto one of the internal (15) and external (12) components only, and having one free end facing the other of said internal (15) and external (12) components and having no contact with said other component at rest.

2. The multi-axis isolation device as claimed in claim 1, **characterized in that** said flexible buffers (19) of said isolation modules (11) each comprise at least one element made from elastomer coming into contact with said other facing rigid component, in the active position of the flexible buffer (19).

3. The multi-axis isolation device as claimed in either of claims 1 and 2, **characterized in that** said external component (12) is U-shaped.

4. The multi-axis isolation device as claimed in either of claims 2 and 3, **characterized in that** said elastomer element of said three flexible buffers (19) of at least one module (11) is fixed onto said external component (12).

5. The multi-axis isolation device as claimed in any one of claims 2 to 4, **characterized in that** said elastomer elements of said three flexible buffers (19) of at least one module (11) are combined into a single layer of elastomer fixed with no discontinuity onto an internal surface of the external component (12).

6. The multi-axis isolation device as claimed in any one of claims 2 to 5, **characterized in that** the assembly formed from said isolation stud or studs (18) and from said elastomer elements of said three flexible buffers (19) of at least one module (11) is formed from one single elastomer block with no discontinuity.

7. The multi-axis isolation device as claimed in any one of claims 1 to 6, **characterized in that** at least one flexible buffer (19) of at least one module (11) is formed from an elastomer element, mounted onto only one of said internal (15) and external (12) components, and having one free end facing the other of said internal (15) and external (12) components and having no contact with said other component at rest, said part facing said elastomer element being formed from a metal protrusion from said other internal or external component.

8. The multi-axis isolation device as claimed in any one of claims 1 to 7, **characterized in that** each isolation module (11) comprises a single elastomer isolation stud, which is longitudinal (18a).

9. The multi-axis isolation device as claimed in any one of claims 1 to 7, **characterized in that** each isolation module (11) comprises two longitudinal elastomer isolation studs (18a), disposed on either side of the internal component (15), in a substantially symmetrical position, the two studs (18a) being of the same geometry and of the same rigidity.

10. The multi-axis isolation device as claimed in claim 9, **characterized in that** each isolation module (11) additionally comprises a lateral elastomer isolation stud (18b).

11. The multi-axis isolation device as claimed in any one of claims 1 to 7, **characterized in that** each isolation module (11) comprises a single elastomer isolation stud, which is lateral (18b).

12. The multi-axis isolation device as claimed in any one of claims 1 to 11, **characterized in that** the two longitudinal flexible buffers (19a) are disposed in a substantially symmetrical manner and have the same characteristics at least in terms of rigidity, play and contact surface area.

13. The multi-axis isolation device as claimed in any one of claims 1 to 12, **characterized in that**, in each isolation module (11), the angle between the direction (Y₁, Y₁) of each longitudinal buffer (19a) and the direction (Y₂, Y₂) of the lateral buffer (19b) is equal to 90°.

14. The multi-axis isolation device as claimed in any one of claims 1 to 12, **characterized in that**, in each isolation module (11), the angle between the direction of each longitudinal buffer (19a) and the direction of the lateral buffer (19b) is different from 90°, non-zero, and typically greater than 10°.

15. The multi-axis isolation device as claimed in any one of claims 1 to 14, **characterized in that**, in each isolation module (11), the longitudinal buffers (19a) are the furthest possible from the fixing point of the equipment (61) or of its support (17).

16. The multi-axis isolation device as claimed in any one of claims 1 to 15, **characterized in that** it comprises four identical modules (11) preferably disposed at the corners of a square and preferably oriented symmetrically along the diagonals of the square.

17. The multi-axis isolation device as claimed in any one of claims 1 to 16, **characterized in that** the isolation studs (18) and the flexible buffers (19) have at least one standard shape, preferably substantially cylindrical or parallelepipedal, the dimensions of the various studs (18) and buffers (19) not necessarily being identical.

18. The multi-axis isolation device as claimed in any one of claims 1 to 17, **characterized in that** the isolation studs (18) and the flexible buffers (19) plug into one another, one being for example a cylinder and the other a ring or annular part surrounding the cylinder, in such a manner as to optimize the size of the device.

19. The multi-axis isolation device as claimed in any one of claims 1 to 18, **characterized in that** the angles (α) between, on the one hand, the mid-planes (22) of the external parts (15b) of said internal components (15) facing said external components (12) and, on the other hand, the installation plane (21) of the equipment (61) are non-zero.

20. The multi-axis isolation device as claimed in claim 19, **characterized in that** said angles (α), preferably equal, are such that the center of gravity (62) of the equipment (61) to be isolated is situated close to the mid-planes (22) of said internal components (15) of the isolation modules (11) in order to favor the isolation of the tilting modes of the equipment (61).

21. The multi-axis isolation device as claimed in claim 19, **characterized in that** said angles (α), preferably equal, are such that the center of gravity (62) of the equipment (61) to be isolated is situated far away from the mid-planes (22) of said internal components (15) of the isolation modules (11) in order to favor the frequency decoupling between the suspension modes of the isolation device and the resonant vibration modes of the equipment (61).

22. The multi-axis isolation device as claimed in any one of claims 1 to 21, **characterized in that** the suspension modes of the isolation device are lower than those of the equipment (61) to be isolated by a minimum of a factor of 2.

23. The multi-axis isolation device as claimed in any one of claims 1 to 22, **characterized in that** the characteristics of the isolation studs (18), in terms of cross section, height, visco-elastic modulus, angles between the longitudinal studs (18) and the mid-plane (22) of the internal component (15), angles between the mid-planes (22) of the internal components (15) and the installation plane (21) of the equipment (61) on the internal components (15) of said isolation modules (11), are chosen so as to ensure that the transmissibility frequency functions of the force and torque efforts along the three axes for small movements, below the active position of the flexible buffers (19), correspond to a specified bandwidth, in such a manner that, for example, the vibrations with low amplitudes in force and torque transmitted by the equipment (61) to the supporting structure (14) are correctly filtered beyond a certain frequency, and that the useful forces and torques generated by the equipment (61) are transmitted without detrimental deformation.

24. The multi-axis isolation device as claimed in any one of claims 1 to 23, **characterized in that** the characteristics of the flexible buffers (19), in terms of cross section, elastomer height, visco-elastic modulus of the elastomer, dimensions of the gap between the flexible buffer (19) and the facing component (12, 15), are such that too great a deformation of the isolation studs (18), when high loads are applied to the device, is avoided, thus preventing any deterioration or undesirable irreversible phenomenon, and simultaneously, the transmissibility frequency functions of the force and torque efforts along the three axes over the whole range of operation for which the device is designed correspond to a specified bandwidth, in such a manner that the vibrations and shocks with high amplitudes in force and torque transmitted by the supporting structure (14) to the equipment (61) are correctly filtered.

25. The multi-axis isolation device as claimed in any one of claims 1 to 24, **characterized in that** the play in the longitudinal buffers (19a) of each isolation module (11) typically only represents 0.5 to a few percent of the shortest distance that separates two longitudinal buffers (19a) of two separate isolation modules (11).

## Patentansprüche

1. Mehrachsige Isolationsvorrichtung für wenigstens eine vibrationserzeugend Einrichtung (61), die sich an Bord einer Trägerstruktur (14), wie beispielsweise eines Satelliten, befindet, umfassend wenigstens drei Isolationsmodule (11), die an dem Rand der Vibrationseinrichtung (61) oder eines Trägers (17) der letzteren verteilt sind, **dadurch gekennzeichnet, dass**
jedes Isolationsmodul zwei starre Komponenten umfasst, von denen die eine (12), die sogenannte Außenkomponente, dazu bestimmt ist, an der Trägerstruktur (14) befestigt zu werden, und die andere (15), die sogenannte Innenkomponente, dazu bestimmt ist, an der Vibrationseinrichtung (61) oder an ihrem Träger (17) befestigt zu werden, wobei die Innen- (15) und die Außenkomponente (12) durch wenigstens einen Elastomer-Isolationsblock (18) miteinander verbunden sind, der durch seine Deformation gemäß wenigstens einer seiner Achsen bei Zug, Kompression oder Scherung die Übertragung von von der Einrichtung (61) erzeugten Vibrationen geringer Amplitude dämpft, wobei jedes Isolationsmodul (11) auch einen flexiblen Seitenanschlag (19b) und zwei flexible Längsanschläge umfasst, die in entgegengesetzte Richtungen (19a) aktiv sind, wobei jeder an nur einer von Innen- (15) und Außenkomponente (12) angebracht ist, und ein freies Ende aufweist, das dem anderen von Innen- (15) und Außenkomponente (12) gegenüberliegt und im Ruhezustand keinen Kontakt mit der anderen Komponente hat.

2. Mehrachsige Isolationsvorrichtung nach Anspruch 1, **dadurch gekennzeichnet, dass** die flexiblen Anschläge (19) der Isolationsmodule (11) jeweils wenigstens ein Elastomer-Element umfassen, das in Kontakt mit der anderen starren gegenüberliegenden Komponente (12, 15) in einer aktiven Position des flexiblen Anschlags (19) kommt.

3. Mehrachsige Isolationsvorrichtung nach einem der Ansprüche 1 oder 2, **dadurch gekennzeichnet, dass** die Außenkomponente (12) eine BügelForm aufweist.

4. Mehrachsige Isolationsvorrichtung nach einem der Ansprüche 2 oder 3, **dadurch gekennzeichnet, dass** das Elastomer-Element der drei flexiblen Anschläge (19) wenigstens eines Moduls (11) an der Außenkomponente (12) befestigt ist.

5. Mehrachsige Isolationsvorrichtung nach einem der Ansprüche 2 bis 4, **dadurch gekennzeichnet, dass** die Elastomer-Elemente der drei flexiblen Anschläge (19) wenigstens eines Moduls (11) in einer einzigen ElastomerSchicht vereinigt sind, die ohne Unstetigkeit an einer Innenfläche der Außenkomponente (12) befestigt ist.

6. Mehrachsige Isolationsvorrichtung nach einem der Ansprüche 2 bis 5, **dadurch gekennzeichnet, dass** die aus dem Isolationsblock bzw. den Isolationsblöcken (18) und den Elastomer-Elementen der drei flexiblen Anschläge (19) wenigstens eines Moduls (11) gebildete Anordnung aus einem einzigen Elastomer-Block ohne Unstetigkeit gebildet ist.

7. Mehrachsige Isolationsvorrichtung nach einem der Ansprüche 1 bis 6, **dadurch gekennzeichnet, dass** wenigstens ein flexibler Anschlag (19) wenigstens eines Moduls (11) aus einem Elastomer-Element gebildet ist, das an nur einem von Innen- (15) und Außenkomponente (12) angebracht ist und ein freies Ende aufweist, das dem anderen von der Innen- (15) und der Außenkomponente (12) gegenüberliegt und im Ruhezustand keinen Kontakt mit der anderen Komponente hat, wobei der dem Elastomer-Element gegenüberliegende Abschnitt aus einem Metall-Vorsprung der anderen Innen- oder Außenkomponente gebildet ist.

8. Mehrachsige Isolationsvorrichtung nach einem der Ansprüche 1 bis 7, **dadurch gekennzeichnet, dass** jedes Isolationsmodul (11) einen einzigen Elastomer-Isolationsblock umfasst, der longitudinal (18a) ist.

9. Mehrachsige Isolationsvorrichtung nach einem der Ansprüche 1 bis 7, **dadurch gekennzeichnet, dass** jedes Isolationsmodul (11) zwei Elastomer-Isolationsblöcke umfasst, die longitudinal (18a) sind, die beidseitig von der Innenkomponente (15) in im Wesentlichen symmetrischer Position angeordnet sind, wobei die beiden Blöcke (18a) dieselbe Geometrie und dieselbe Steifigkeit aufweisen.

10. Mehrachsige Isolationsvorrichtung nach Anspruch 9, **dadurch gekennzeichnet, dass** jedes Isolationsmodul (11) ferner einen lateralen (18b) Elastomer-Isolationsblock umfasst.

11. Mehrachsige Isolationsvorrichtung nach einem der Ansprüche 1 bis 7, **dadurch gekennzeichnet, dass** jedes Isolationsmodul (11) einen einzigen Elastomer-Isolationsblock umfasst, der lateral (18b) ist.

12. Mehrachsige Isolationsvorrichtung nach einem der Ansprüche 1 bis 11, **dadurch gekennzeichnet, dass** die beiden flexiblen Längsanschläge (19a) in im Wesentlichen symmetrischer Weise angeordnet sind und dieselben Eigenschaften wenigstens in Bezug auf Steifigkeit, Spiel, Kontaktfläche aufweisen.

13. Mehrachsige Isolationsvorrichtung nach einem der Ansprüche 1 bis 12, **dadurch gekennzeichnet, dass** in jedem Isolationsmodul (11) der Winkel zwischen der Richtung (Y1, Y1) jedes Längsanschlags (19a) und der Richtung (Y2, Y2) des Seitenanschlags (19b) 90° beträgt.

14. Mehrachsige Isolationsvorrichtung nach einem der Ansprüche 1 bis 12, **dadurch gekennzeichnet, dass** in jedem Isolationsmodul (11) der Winkel zwischen der Richtung jedes Längsanschlags (19a) und der Richtung des Seitenanschlags (19b) von 90° verschieden ist, nicht Null ist und typischerweise größer als 10° ist.

15. Mehrachsige Isolationsvorrichtung nach einem der Ansprüche 1 bis 14, **dadurch gekennzeichnet, dass** in jedem Isolationsmodul (11) die Längsanschläge (19a) so weit wie möglich von dem Befestigungspunkt der Einrichtung (61) oder ihres Trägers (17) entfernt sind.

16. Mehrachsige Isolationsvorrichtung nach einem der Ansprüche 1 bis 15, **dadurch gekennzeichnet, dass** sie vier identische Module (11) umfasst, die vorzugsweise an den Ecken eines Vierecks angeordnet sind und vorzugsweise in symmetrischer Weise gemäß den Diagonalen des Vierecks ausgerichtet sind.

17. Mehrachsige Isolationsvorrichtung nach einem der Ansprüche 1 bis 16, **dadurch gekennzeichnet, dass** die Isolationsblöcke (18) und die flexiblen Anschläge (19) wenigstens eine Standardform aufweisen, vorzugsweise eine im Wesentlichen zylindrische Form oder Parallelepiped-Form, wobei die Dimensionen der verschiedenen Blöcke (18) und der Anschläge (19) nicht notwendig identisch sind.

18. Mehrachsige Isolationsvorrichtung nach einem der Ansprüche 1 bis 17, **dadurch gekennzeichnet, dass** die Isolationsblöcke (18) und die flexiblen Anschläge (19) ineinandergefügt sind, wobei eines beispielsweise ein Zylinder ist und das andere ein Ring oder ein ringförmiger, den Zylinder umgebender Abschnitt ist, so dass der Raumbedarf der Vorrichtung optimiert wird.

19. Mehrachsige Isolationsvorrichtung nach einem der Ansprüche 1 bis 18, **dadurch gekennzeichnet, dass** die Winkel (α) zwischen den Mittelebenen (22) der Außenabschnitte (15b) der Innenkomponenten (15), die den Außenkomponenten (12) gegenüberliegen, einerseits und der Lageebene (21) der Einrichtung (61) andererseits nicht Null sind.

20. Mehrachsige Isolationsvorrichtung nach Anspruch 19, **dadurch gekennzeichnet, dass** die, vorzugsweise gleichen, Winkel (α) so sind, dass sich der Schwerpunkt (62) der zu isolierenden Einrichtung (61) in der Nähe der Mittelebenen (22) der Innenkomponenten (15) der Isolationsmodule (11) befindet, um die Isolierung der Kippmoden der Einrichtung (61) zu begünstigen.

21. Mehrachsige Isolationsvorrichtung nach Anspruch 19, **dadurch gekennzeichnet, dass** die, vorzugsweise gleichen, Winkel (α) so sind, dass sich der Schwerpunkt (62) der zu isolierenden Einrichtung (61) fern von den Mittelebenen (22) der Innenkomponenten (15) der Isolationsmodule (11) befindet, um die Frequenz-Entkopplung zwischen den Suspensionsmoden der Isolationsvorrichtung und den Vibrations-Eigenmoden der Einrichtung (61) zu begünstigen.

22. Mehrachsige Isolationsvorrichtung nach einem der Ansprüche 1 bis 21, **dadurch gekennzeichnet, dass** die Suspensionsmoden der Isolationsvorrichtung um wenigstens einen Faktor 2 kleiner sind als die der zu isolierenden Einrichtung (61).

23. Mehrachsige Isolationsvorrichtung nach einem der Ansprüche 1 bis 22, **dadurch gekennzeichnet, dass** die Eigenschaften der Isolationsblöcke (18) in Bezug auf Schnitt, Höhe, Viskoelastizitätsmodul, Winkel zwischen den Längsblöcken (18) und der Mittelebene (22) der Innenkomponente (15), Winkel zwischen den Mittelebenen (22) der Innenkomponenten (15) und der Lageebene (21) der Einrichtung (61) an den Innenkomponenten (15) der Isolationsmodule (11) so gewählt sind, dass gewährleistet ist, dass die Transmissibilitätsfrequenzfunktionen der Kraft- und Drehmoment-Belastungen gemäß den drei Achsen für kleine Bewegungen diesseits der aktiven Position der flexiblen Anschläge (19) einer spezifizierten Größe entsprechen, so dass beispielsweise die Vibrationen geringer Amplituden in Kraft und Drehmoment, die durch die Einrichtung (61) auf die Trägerstruktur (14) übertragen werden, jenseits einer bestimmten Frequenz korrekt gefiltert werden, und dass die Nutzkräfte und - drehmomente, die von der Vorrichtung (61) erzeugt werden, ohne nachteilige Deformation übertragen werden.

24. Mehrachsige Isolationsvorrichtung nach einem der Ansprüche 1 bis 23, **dadurch gekennzeichnet, dass** die Eigenschaften der flexiben Anschläge (19) in Bezug auf Schnitt, Elastomer-Höhe, Viskoelastizitätsmodul des Elastomers, Größe des Zwischenraums zwischen dem flexiblen Anschlag (19) und der gegenüberliegenden Komponente (12, 15) so sind, dass eine zu starke Deformation der Isolationsblöcke (18) bei Anwendung starker Belastungen auf die Vorrichtung vermieden wird, wodurch jede Beschädigung oder unerwünschtes irreversibles Phänomen verhindert wird, und gleichzeitig entsprechen die Transmissibilitätsfrequenzfunktionen der Kraft- und Drehmoment-Belastungen gemäß den drei Achsen in dem gesamten für die Vorrichtung vorgesehenen Funktionsbereich einer spezifizierten Größe, so dass die Vibrationen und Stöße großer Amplituden in Kraft und Drehmoment, die durch die Trägerstruktur (14) auf die Einrichtung (61) übertragen werden, korrekt gefiltert werden.

25. Mehrachsige Isolationsvorrichtung nach einem der Ansprüche 1 bis 24, **dadurch gekennzeichnet, dass** das Spiel der Längsanschläge (19a) jedes Isolationsmoduls (11) typischerweise nur 0,5 bis zu einigen Prozent des kleinsten Abstands darstellt, der zwei Längsanschläge (19a) von zwei verschiedenen Isolationsmodulen (11) trennt.
